# EUROPÄISCHE PATENTSCHRIFT

(11) **EP 4 033 090 B1**
(45) Veröffentlichungstag und Bekanntmachung des Hinweises auf die Patenterteilung: **28.08.2024**
(21) Anmeldenummer: 21152924.3
(22) Anmeldetag: 22.01.2021
(51) Int. Cl.: F03D 7/02

(54) **VERFAHREN ZUM STEUERN EINER WINDENERGIEANLAGE**
METHOD FOR CONTROLLING A WIND ENERGY SYSTEM
PROCÉDÉ DE COMMANDE D'UNE ÉOLIENNE

(43) Veröffentlichungstag der Anmeldung: 27.07.2022
(73) Patentinhaber: Wobben Properties GmbH, 26607 Aurich (DE)
(72) Erfinder: Schaper, Ulf, 27254 Staffhorst (DE); von Aswege, Enno, 26629 Großefehn (DE); Funcke, Paul Gerke, 26122 Oldenburg (DE)
(74) Vertreter: Eisenführ Speiser

(56) Entgegenhaltungen:
- EP-A1- 3 179 097
- CN-A- 103 187 912
- CN-A- 103 758 698
- CN-A- 108 923 473

## Beschreibung

Die vorliegende Erfindung betrifft ein Verfahren zum Steuern einer Windenergieanlage. Die vorliegende Erfindung betrifft auch eine entsprechende Windenergieanlage.

Windenergieanlagen sind bekannt, sie gewinnen elektrische Leistung aus Wind. Dazu weisen sie üblicherweise einen Rotor mit Rotorblättern auf, die vom Wind bewegt werden. Der Rotor rotiert daraufhin mit einer Rotordrehzahl, die auch von der Windgeschwindigkeit abhängt, und treibt einen Generator an.

Zum Steuern dieser Leistungserzeugung können die Rotorblätter in ihrem Anstellwinkel verstellt werden, was als Pitchen bezeichnet wird. Außerdem kann die Abgabeleistung bzw. ein Generatormoment des Generators zum Steuern der Windenergieanlage beeinflusst werden. Damit resultiert auch eine variable Rotordrehzahl und damit variable Generatordrehzahl. Im Falle einer getriebelosen Windenergieanlage entspricht die Rotordrehzahl der Generatordrehzahl.

Die Steuerung der Windenergieanlage hat besonders die Aufgabe, bei niedrigen Drehzahlen einen möglichst leistungsoptimalen Betrieb zu gewährleisten, bei dem möglichst viel Leistung erzeugt wird. Bei hohen Windgeschwindigkeiten ist die Windenergieanlage so zu steuern, dass eine Drehzahlbegrenzung und eine Leistungsbegrenzung eingehalten werden.

Bei geringen Windgeschwindigkeiten kann auch von einem Teillastbetrieb oder Teillastbereich und bei hohen Windgeschwindigkeiten von einem Volllastbetrieb bzw. Volllastbereich gesprochen werden. Im Teillastbetrieb ist also möglichst viel Leistung zu erzeugen und im Volllastbetrieb ist die Windenergieanlage so zu steuern, dass sie vor einer Überlastung geschützt wird. Entsprechende Steuerkonzepte sind bekannt. Demnach wird üblicherweise für den Teillastbestrieb eine Kennliniensteuerung verwendet, bei der eine Betriebskennlinie einen Zusammenhang zwischen Drehzahl und dazu einzustellender Leistung vorgibt. Der Blattwinkel ist dabei meist konstant. Im Volllastbetrieb wird meist eine Drehzahlregelung eingesetzt, die über die Verstellung der Rotorblätter versucht, die Drehzahl bei konstanter Leistung ebenfalls konstant zu halten.

Zu diesen Grundanforderungen können weitere Besonderheiten hinzukommen. So kommt es häufig vor, dass der Drehzahlbereich im Teillastbetrieb auch einen Drehzahlbereich umfasst, in dem eine Resonanzstelle der Windenergieanlage liegt. Um dieses Problem zu umgehen, kann vorgesehen sein, dass eine solche Resonanzstelle umfahren wird, indem Drehzahlen vermieden werden, die in einem solchen Resonanzbereich liegen. Ein solches Umfahren einer Drehzahl kann allerdings problematisch sein, weil dadurch in der Betriebskennlinie eine Unstetigkeitsstelle entsteht. Das kann zu Problemen bei der praktischen Umsetzung einer solchen Umsteuerung führen.

Weitere Probleme können im Übergangsbereich vom Teillastbetrieb zum Volllastbetrieb entstehen. Hier ist besonders kritisch, dass die Betriebskennlinie vergleichsweise steil ist, sodass eine geringe Drehzahländerung zu einer hohen Leistungsänderung führt, was regelungstechnisch eine Herausforderung sein kann und besonders ähnliche Probleme wie eine Unstetigkeitsstelle hervorrufen kann. Es kommt hinzu, dass Schwankungen der Windgeschwindigkeit für solche Unstetigkeitsstellen oder fast unstetigen Bereiche zu einer hohen, möglicherweise zu hohen Reglertätigkeit führen können.

Die europäische Offenlegungsschrift EP 3 179 097 A1 betrifft ein Windenergieerzeugungssystem und ein Verfahren zur Steuerung eines Windenergieerzeugungssystems. Die Offenlegungsschrift CN 103187912 A betrifft ein Verfahren zur Drehmomentsteuerung eines windbetriebenen Generators zum schnellen Durchlaufen eines Resonanzbandes. Die Offenlegungsschrift CN108923473 A offenbart ein Windpark-Energieverteilungsverfahren für einen weichen Turm und ein System davon auf der Grundlage einer intelligenten Übergangstechnologie. Die Offenlegungsschrift CN103758698 A stellt ein Drehzahlregelungsverfahren und -system für einen Windturbinengenerator bereit.

Der vorliegenden Erfindung liegt die Aufgabe zugrunde, zumindest eines der oben genannten Probleme zu adressieren. Insbesondere soll eine Lösung vorgeschlagen werden, bei der eine Steuerung beschrieben wird, die auch in Drehzahlbereichen gut arbeitet, die im Bereich einer Resonanzfrequenz und/oder im Bereich eines Übergangs vom Teillastbetrieb zu Volllastbetrieb liegt. Zumindest soll zu bisher bekannten Lösungen eine alternative Lösung vorgeschlagen werden.

Erfindungsgemäß wird ein Verfahren gemäß Anspruch 1 vorgeschlagen. Dieses Verfahren zum Steuern einer Windenergieanlage geht von einer Windenergieanlage aus, die einen aerodynamischen Rotor aufweist, der mit variabler Drehzahl betrieben wird und der in ihrem Blattwinkel verstellbare Rotorblätter aufweist. Die Windenergieanlage kann in einem Teillastbereich und in einem Volllastbereich betrieben werden. Im Teillastbereich liegen Windgeschwindigkeiten bis zu einer Nennwindgeschwindigkeit vor, und in dem Volllastbereich liegen Windgeschwindigkeiten ab der Nennwindgeschwindigkeit vor. Die Bereiche können leicht überlappen, zumal die Windgeschwindigkeit schwanken kann und auch nicht beliebig genau bestimmt werden kann.

Dabei wird die Windenergieanlage in dem Teillastbereich durch eine Betriebskennliniensteuerung gesteuert, die eine Betriebskennlinie verwendet. Die Betriebskennlinie gibt einen Zusammenhang zwischen der Drehzahl, nämlich der Rotordrehzahl, und einer einzustellenden Generatorzustandsgröße vor. Die einzustellende Generatorzustandsgröße kann eine Generatorleistung oder ein Generatormoment sein. Dabei erfolgt die Betriebskennliniensteuerung so, dass in Abhängigkeit von einer erfassten Drehzahl ein durch die Betriebskennlinie vorgegebener Wert der Generatorzustandsgröße eingestellt wird. Eine Betriebskennlinie kann auch durch eine funktionale Beschreibung, z.B. eine Formel oder Funktion vorgegeben werden. Die Betriebskennlinie kann auch als Tabelle hinterlegt sein.

Ist also die Generatorzustandsgröße die Generatorleistung, so wird eine Drehzahl erfasst und zu der erfassten Drehzahl gibt die Betriebskennlinie einen zugehörigen, einzustellenden Wert der Generatorleistung wieder. Diese Generatorleistung wird dann eingestellt. Üblicherweise wird der Blattwinkel hierbei unverändert gelassen. Die eingestellte Generatorleistung führt dann auch in Abhängigkeit von der Drehzahl zu einem Generatormoment, das einem Rotormoment, das durch den Wind in dem Rotor erzeugt wird, entgegenwirkt.

Sind diese beiden Drehmomente gleich, hat sich ein stabiler Betriebspunkt ergeben. Sind diese beiden Drehmomente nicht gleich, beschleunigt der Rotor oder verlangsamt sich. Die Rotordrehzahl ändert sich also und damit wird aus der Betriebskennlinie ein neuer Wert für die Generatorleistung bestimmt und eingestellt, bis sich ein stabiler Betriebspunkt ergibt.

In dem Volllastbereich wird die Windenergieanlage durch eine Pitchregelung geregelt, bei der die Drehzahl durch Verstellen der Blattwinkel auf einen Drehzahlsollwert geregelt wird. Insbesondere wird hier die Drehzahl auf einen Nenndrehzahlwert geregelt. Das dient besonders dem Schutz der Windenergieanlage vor einer Überlastung. Steigt also die Drehzahl über diesen Drehzahlwert, auf den die Windenergieanlage geregelt werden soll, so werden die Rotorblätter in ihrem Blattwinkel verstellt, nämlich aus dem Wind gedreht, zumindest um einen oder wenige Grad. Dadurch wird weniger Leistung aus dem Wind entnommen und die Drehzahl kann dadurch gesenkt bzw. auf dem gewünschten Wert gehalten werden.

Es wird weiter vorgeschlagen, dass in wenigstens einem vorgebbaren Drehzahlbereich des Teillastbereichs und/oder in einem Übergangsbereich vom Teillastbereich zum Volllastbereich die Windenergieanlage durch eine Drehzahlleistungsregelung geregelt wird, bei der die Drehzahl durch Verstellen der Generatorzustandsgröße auf einen Drehzahlsollwert geregelt wird. Von der ansonsten für den Teillastbereich vorgesehenen Betriebskennliniensteuerung wird somit in diesen Bereichen abgewichen.

Das kann besonders für einen Drehzahlbereich des Teillastbereichs vorgesehen sein, der somit einen kleinen Ausschnitt des Teillastbereichs bildet, in dem eine Resonanzfrequenz auftreten kann, bzw. in dem eine Resonanzstelle vorhanden ist. Besonders kann dieser vorgebbare Drehzahlbereich des Teillastbereichs als Vermeidungsbereich bezeichnet werden, in dem nämlich eine Drehzahl liegt, die vermieden werden soll. Durch diese vorgesehene Drehzahlleistungsregelung kann dann die Drehzahl auf eine Drehzahl am Anfang oder am Ende des vorgebbaren Drehzahlbereichs des Teillastbereichs geregelt werden. Damit kann die Drehzahl, die insbesondere in der Mitte eines solchen Drehzahlbereichs liegt, die also in der Mitte des Vermeidungsbereichs liegt, ausgespart werden.

Für diese Drehzahlleistungsregelung sind dabei zwei Regelkaskaden vorgesehen. Die Drehzahlleistung erfolgt also so, dass in einer äußeren Kaskade aus einem Vergleich einer vorgegebenen Solldrehzahl mit einer erfassten Istdrehzahl über einen ersten Regler ein erster Beschleunigungssollwert des Rotors bestimmt wird. Insoweit wird dieser Regelfehler der Drehzahl in diesen Beschleunigungssollwert übertragen. Dieser Beschleunigungssollwert des Rotors kann somit verstanden werden als ein Beschleunigungswert, um den der Rotor beschleunigen soll. Der Beschleunigungssollwert kann auch negative Werte annehmen und insoweit angeben, wie die Drehzahl sich verringern soll.

Es ist dann weiter vorgesehen, dass in einer inneren Kaskade aus einem Vergleich des ersten Beschleunigungssollwertes mit einem erfassten Beschleunigungsistwert des Rotors über einen zweiten Regler ein Generatorsollwert als Sollwert für die Generatorzustandsgröße bestimmt wird. Der zweite Regler setzt also den Regelfehler der Rotorbeschleunigung in einen Generatorleistungssollwert oder einen Generatormomentsollwert um, je nachdem, welche der beiden Varianten für die Generatorzustandsgröße vorgesehen ist.

Somit wird für die Betriebskennliniensteuerung im Teillastbereich für besondere Bereiche ein Wechsel in eine Drehzahlregelung vorgeschlagen. Es wird also von einer Steuerung in eine Regelung gewechselt. Für die Regelung, nämlich die Drehzahlregelung, wird dabei eine spezielle Kaskadenstruktur vorgesehen, die in der äußeren Kaskade die Drehzahl regelt und dafür in der inneren Kaskade ein Drehmoment regelt.

Dazu wurde besonders erkannt, dass durch eine solche Drehzahlregelung bei Unstetigkeitsstellen oder Stellen mit sehr großer Steigung in einer Drehzahl-Leistungskennlinie das Drehmoment und damit auch die Leistung gut mitgesteuert werden können. Besonders wurde hier erkannt, dass große Leistungsveränderungen bei geringen Drehzahländerungen auftreten können, die sich hierdurch kontrollieren lassen. Es kann vermieden werden, dass große Rotorbeschleunigungen auftreten. Es kommt hinzu, dass hierdurch eine Interaktion zwischen dem Drehzahlregler und einem Leistungsregler ermöglicht oder vereinfacht wird. Das wird unten noch in wenigstens einem Ausführungsbeispiel erläutert.

Gemäß einem Aspekt wird vorgeschlagen, dass die Drehzahlleistungsregelung einen Integralanteil aufweist, insbesondere, dass der zweite Regler einen Integralanteil aufweist. Hier wurde besonders erkannt, dass bei Unstetigkeitsstellen oder sehr steilen Drehzahl-Leistungskurven das Halten der Drehzahl auf einen Wert sinnvoll sein kann, wofür der Integralanteil verwendet werden kann. Durch den Integralanteil kann die ausgegebene Leistung auch ohne bleibenden Regelfehler gehalten werden.

Insbesondere wurde erkannt, dass es nicht erforderlich ist, diesen Integralanteil in der äu-βeren Reglerkaskade vorzusehen. Dadurch wird vermieden, dass eine Abweichung zwischen Soll- und Istdrehzahl zu einem ansteigenden Wert des Solldrehmoments führt. Stattdessen kann der Integralanteil in der inneren Kaskade verwendet werden. Die innere Kaskade erzeugt aus dem Soll-Istwert-Vergleich für den Beschleunigungswert eine Generatorleistung oder ein Generatormoment, das insoweit als Stellgröße angesehen werden kann. Ein Hochlaufen dieser Stellgröße durch den Integralanteil wird dadurch sofort in dem Generator umgesetzt und könnte sofort Wirkung entfalten, sodass der Integralanteil in dieser inneren Kaskade vorgeschlagen wird.

Gemäß einem Aspekt wird vorgeschlagen, dass in der Drehzahlleistungsregelung der erste Beschleunigungssollwert und der Beschleunigungsistwert jeweils als eine Beschleunigungsleistung ausgebildet sind. Die Beschleunigungsleistung ist einer Rotorbeschleunigung zugeordnet und beschreibt eine Leistung, die erforderlich ist, die Rotorbeschleunigung hervorzurufen. Dadurch kann auch besonders die Differenz zwischen einer Soll- und Istbeschleunigung als Leistung ausgedrückt und bewertet werden. Eine solche Leistung kann auch besonders in Beziehung gesetzt werden mit einer Leistung, die zur Regelung zur Verfügung steht. Besonders vorteilhaft ist es, darüber einen Abgleich mit der Regelung im Volllastbereich zu erleichtern. Beide Regelungen können über die Betrachtung dieser Leistung in entsprechenden Stellgrößen oder Regelungsgrößen vergleichbar werden.

Gemäß einem Aspekt wird vorgeschlagen, dass in der Drehzahlleistungsregelung die äu-βere Kaskade zum Bestimmen des ersten Beschleunigungssollwertes wenigstens einen Beschleunigungsgrenzwert aufweist. Wird für die Beschleunigung eine Beschleunigungsleistung betrachtet, können entsprechende Leistungsgrenzwerte vorgesehen sein. Die Drehzahlregelung kann dadurch in relevanten Grenzen gehalten werden. Insbesondere ist erreichbar, dass berücksichtigt werden kann, wie viel Leistung für die Umsetzung der Drehzahlregelung überhaupt zur Verfügung steht. Dieser Vorteil ist nicht nur dann erreichbar, wenn für die Beschleunigung eine Beschleunigungsleistung betrachtet wird. Als verfügbare Leistung kann sowohl die aus dem Wind verfügbare Leistung als auch die einstellbare Generatorleistung Berücksichtigung finden.

Hier kann besonders berücksichtigt werden, dass durch die Windgeschwindigkeit eine maximale Leistung zum Antreiben des Rotors gegeben ist. In einem bestimmten Arbeitspunkt dürfte bereits ein Großteil der verfügbaren Leistung aus dem Wind verwendet werden. Dann kann eine Differenzleistung bis zur maximal entnehmbaren Leistung verbleiben, die für die Drehzahlregelung zur Verfügung steht. Dies kann bei dem wenigstens einen Beschleunigungsgrenzwert berücksichtigt werden. Ähnlich ist es bei dem Generator, der aus seinem aktuellen Arbeitspunkt ebenfalls nicht beliebig verstellt werden kann und damit nur bis zu einem bestimmten Wert Leistung für die Drehzahlregelung bereitstellen kann. Das kann berücksichtigt werden. Im Übrigen kann auch beim Reduzieren der aus dem Wind in einem Betriebspunkt entnommenen Leistung ein Unterwert berücksichtigt werden. Ein solcher unterer Wert kann - um es etwas anschaulich zu überzeichnen - ein solcher sein, bei dem die Windenergieanlage stehenzubleiben droht.

Entsprechend wird vorzugsweise vorgeschlagen, dass der wenigstens eine Beschleunigungsgrenzwert einstellbar ist. Er kann an die erläuterten Gegebenheiten dadurch angepasst werden.

Außerdem oder alternativ wird vorgeschlagen, dass als der wenigstens eine Beschleunigungsgrenzwert ein oberer und ein unterer Beschleunigungsgrenzwert mit unterschiedlichen Werten vorgesehen sind. Hier wird besonders auch berücksichtigt, dass aus aerodynamischen Gründen verfügbare Leistung zum Erhöhen der Drehzahl mit einer anderen Größe vorliegen kann als Leistung zum Verringern der Drehzahl.

Außerdem oder alternativ wird vorgeschlagen, dass die innere Kaskade zum Bestimmen der Stellgröße zum Einstellen der Generatorzustandsgröße ein Integralglied mit einer Integratorbegrenzung aufweist. Optional ist eine solche Integratorbegrenzung einstellbar und außerdem oder alternativ sind unterschiedliche obere und untere Grenzwerte für die Integratorbegrenzung vorgesehen. Vorteile zum Verwenden des Integralgliedes in der inneren Kaskade und damit in dem zweiten Regler sind oben bereits beschrieben worden.

Hier wird zusätzlich vorgeschlagen, für das jeweilige Integralglied eine Integratorbegrenzung vorzusehen. Damit kann besonders verhindert werden, dass bei einer bleibenden Regelabweichung der Integralanteil immer weiter ansteigt, bzw. in negative Richtung immer weiter abfällt. Auch hier wurde berücksichtigt, dass nur eine begrenzte Leistung als Stellenergie zum Umsetzen der Drehzahlregelung zur Verfügung steht. Durch die Begrenzung des Integralgliedes wird dies berücksichtigt und dadurch kann vermieden werden, dass das Integralglied eine Stellgröße, insbesondere eine entsprechende Sollleistung vorgibt, die gar nicht umgesetzt werden kann. Um dies besonders gut zu berücksichtigen, wird vorgeschlagen, die Integratorbegrenzung einstellbar vorzugeben und/oder entsprechende Leistungsgrenzen durch unterschiedliche obere und untere Grenzwerte zu berücksichtigen.

Gemäß einem Aspekt wird vorgeschlagen, dass der wenigstens eine vorgebbare Drehzahlbereich jeweils als ein Drehzahlvermeidungsbereich vorgesehen ist, der durch eine untere Vermeidungsdrehzahl und eine obere Vermeidungsdrehzahl gekennzeichnet ist. Dazu ist vorgesehen, dass die Drehzahlleistungsregelung verwendet wird, wenn bei steigender Drehzahl die untere Vermeidungsdrehzahl oder bei fallender Drehzahl die obere Vermeidungsdrehzahl erreicht wird. Besonders ist vorgesehen, dass ein solcher Vermeidungsdrehzahlbereich um eine Drehzahl gebildet wird, die eine Resonanzfrequenz bildet bzw. zum Anregen einer Resonanz in der Windenergieanlage beiträgt.

Dazu wird weiter vorgeschlagen, dass bei Verwendung der Drehzahlleistungsregelung die Windenergieanlage in Abhängigkeit von einer vorherrschenden Windgeschwindigkeit in einem unteren Drehzahlbereich, der die untere Vermeidungsdrehzahl umfasst, in einem unteren Arbeitspunkt betreibbar ist, und in einem oberen Drehzahlbereich, der die obere Vermeidungsdrehzahl umfasst, in einem oberen Arbeitspunkt betreibbar ist, und ein Wechseln zwischen dem unteren und dem oberen Arbeitspunkt in Abhängigkeit von einer aerodynamischen Bewertung des unteren und oberen Arbeitspunktes durchgeführt wird.

Dieser Aspekt geht also davon aus, dass bei Verwendung der Drehzahlleistungsregelung die Windenergieanlage in einem dieser beiden Arbeitspunkte betreibbar ist, nämlich im Grunde unterhalb oder oberhalb der zu vermeidenden Resonanzsituation, um es anschaulich auszudrücken. Verändert sich dann die Windgeschwindigkeit, kann ein Wechsel vom oberen Arbeitspunkt zum unteren Arbeitspunkt oder umgekehrt in Betracht kommen. Für einen solchen Wechsel wird vorgeschlagen, eine aerodynamische Bewertung des unteren und oberen Arbeitspunktes durchzuführen.

Hier liegt besonders der Gedanke zugrunde, dass durch die Verwendung der Drehzahlregelung, die hier nämlich durch die vorgeschlagene Drehzahlleistungsregelung durchgeführt wird, die Drehzahl trotz veränderlicher Windgeschwindigkeit im Wesentlichen konstant ist. Die Drehzahl ist daher als Kriterium, ob ein Wechsel zwischen den beiden Arbeitspunkten sinnvoll ist, nicht gut geeignet. Deswegen wird vorgeschlagen, eine aerodynamische Bewertung der beiden Arbeitspunkte vorzunehmen und insbesondere dann zu wechseln, wenn der jeweils andere Arbeitspunkt aerodynamisch besser ist bzw. besser geeignet ist.

Hier wurde besonders auch erkannt, dass eine reine Beurteilung der Generatorleistung, die bei dieser Drehzahlleistungsregelung verstellt wird, ungeeignet sein kann.

Gemäß einem Aspekt wird vorgeschlagen, dass zum Wechseln zwischen dem unteren und oberen Arbeitspunkt eine wenigstens zweistufige Prüfung vorgenommen wird. Dabei wird in einer ersten Stufe geprüft, ob der Arbeitspunkt, zu dem gewechselt werden soll, einen höheren aerodynamischen Wirkungsgrad hat als der Arbeitspunkt, von dem aus gewechselt werden soll. In einer zweiten Stufe wird geprüft, ob die Generatorzustandsgröße, die mit der Teillastdrehzahlregelung bestimmt wird, eine obere oder untere Generatorzustandsgrenze erreicht. Eine solche Generatorzustandsgrenze kann insbesondere ein vorgegebener maximaler Leistungswert sein. Erreicht die Generatorleistung diesen Wert, steigt also die Generatorleistung bei Betrieb im unteren Arbeitspunkt bis zu diesem Wert an, so führt das zum Wechseln vom unteren in den oberen Arbeitspunkt. Entsprechend kann ein unterer Leistungswert vorgegeben sein, der zu einem Wechsel vom oberen in den unteren Arbeitspunkt führt, wenn die Generatorleistung bis zu dieser unteren Leistungsgrenze abfällt.

Insbesondere ist vorgesehen, dass abhängig von der Prüfung in der ersten Stufe ein Wechsel zugelassen wird, und abhängig von der Prüfung in der zweiten Stufe ein Wechsel vorgeschrieben wird. Ist also der aktuelle Arbeitspunkt ungünstiger als der andere Arbeitspunkt, hat er also einen geringeren aerodynamischen Wirkungsgrad als der Arbeitspunkt, zu dem gewechselt werden soll, so kommt ein Wechsel in Betracht. Der Wechsel muss dann aber nicht durchgeführt werden und kann vielmehr von anderen Bedingungen abhängen. Eine solche andere Bedingung kann beispielsweise sein, wie stark der Wind schwankt. Schwankt er stark, wird ein Wechsel zwischen den Arbeitspunkten zurückhaltender vorgenommen. Schwankt die Windgeschwindigkeit aber kaum, so kann es eher sinnvoll sein, in den Arbeitspunkt mit dem höheren aerodynamischen Wirkungsgrad zu wechseln, da anzunehmen ist, dass dieser auch noch eine Zeitlang der Arbeitspunkt mit dem höheren aerodynamischen Wirkungsgrad bleiben wird.

Ist aber eine Grenze erreicht, was in der zweiten Stufe festgestellt wird, so muss gewechselt werden. Hier liegt besonders die Erkenntnis zugrunde, dass nicht optimale Arbeitspunkte eine Zeitlang hingenommen werden können. Die Nachteile können gegen andere Kriterien abgewogen werden.

Beispielsweise verspricht ein Arbeitspunkt mit einem höheren aerodynamischen Wirkungsgrad einen größeren Ertrag. Dieser kann aber mit dem Ertragsverlust durch den Wechsel verglichen werden und dann kann zusätzlich berücksichtigt werden, ob mit einem häufigen Wechseln zu rechnen ist, oder nicht.

Es wurde aber auch erkannt, dass ein zu ungünstiger Arbeitspunkt möglicherweise den Betrieb der Windenergieanlage insgesamt gefährden kann. Wird beispielsweise die Windenergieanlage in dem unteren Drehzahlbereich, insbesondere mit der unteren Vermeidungsdrehzahl mit immer weiter steigender Leistung betrieben, kann das dazu führen, dass der Arbeitspunkt aerodynamisch so ungünstig wird, dass die Windenergieanlage anhält, um nur ein Beispiel zu nennen.

Gemäß einem Aspekt wird vorgeschlagen, dass ein Wechsel zwischen dem unteren und oberen Arbeitspunkt durchgeführt wird, wenn der Arbeitspunkt, zu dem gewechselt werden soll, für einen vorbestimmbaren Prüfzeitraum einen höheren aerodynamischen Wirkungsgrad hat als der Arbeitspunkt, von dem aus gewechselt werden soll. Dadurch kann vermieden werden, dass trotz höherem aerodynamischen Wirkungsgrad des anderen Arbeitspunktes vorschnell gewechselt wird. Insbesondere liegt der vorbestimmbare Prüfzeitraum in einem Bereich von 5 Sekunden bis 10 Minuten, insbesondere im Bereich von 10 Sekunden bis 5 Minuten. Diese Zeitspannen weisen einen unteren Wert auf, der geeignet sein kann, ausreichend lange zu prüfen, ob die Arbeitspunkte bzw. die dafür zugrundeliegenden Windverhältnisse stabil sind. Die beiden oberen Werte von 5 bzw. 10 Minuten geben eine Zeit an, in der Wechselverluste nicht mehr überwiegen. Die konkrete Wahl kann besonders davon abhängen, wie stark sich die beiden Arbeitspunkte unterscheiden. Das wiederum kann davon abhängen, wie groß der Drehzahlvermeidungsbereich gewählt werden muss.

Gemäß einem Aspekt wird vorgeschlagen, dass für die Drehzahlleistungsregelung der Drehzahlsollwert als Konstante vorgegeben wird oder über wenigstens eine Drehzahlkennlinie vorgegeben wird, wobei die Drehzahlkennlinie jeweils Drehzahlwerte in Abhängigkeit von der einzustellenden Generatorzustandsgröße aufweist. Insbesondere ist vorgesehen, dass die Drehzahlkennlinie so ausgebildet ist, dass sie zumindest abschnittsweise eine negative Steigung aufweist, sodass mit zunehmenden Werten der Generatorzustandsgröße die Drehzahlwerte abnehmen.

Somit wird ein steiler, insbesondere senkrechter Ast gemäß einem Drehzahl-/Leistungsdiagramm vorgeschlagen. Die Erläuterungen gelten sinngemäß für das Generatormoment als Generatorzustandsgröße, wenn ein Drehzahl-/Drehmomentdiagramm verwendet wird. Dass der Drehzahlsollwert als Konstante vorgegeben wird, bedeutet, dass bei zunehmendem Wind einer Zunahme der Drehzahl durch entsprechendes Ansteigen der Leistung begegnet wird. Besonders durch einen Regler mit integralem Anteil kann für den vorgegebenen konstanten Drehzahlsollwert eine stationäre Genauigkeit erreicht werden, nämlich durch eine entsprechend hohe Generatorleistung als Stellgröße. Mit zunehmendem Wind steigt also die Leistung an, ohne dass die Drehzahl ansteigt. Sinngemäß kann bei abfallendem Wind die Drehzahl konstant bleiben, während aber die Generatorleistung als Stellgröße abnimmt.

Es wurde erkannt, dass eine negative Steigung sogar Vorteile gegenüber der senkrechten Steigung haben kann. Eine negative Steigung ist somit eine Konstellation, bei der bei zunehmender Windgeschwindigkeit die Drehzahl durch die Drehzahlleistungsregelung nicht ansteigt und sogar noch etwas zurückgeht, während die Generatorleistung als Stellgröße erheblich ansteigt. Beispielsweise kann hierbei die Generatorleistung um 10 % ansteigen, während die Drehzahl um 1 % wieder abfällt. Durch eine solche Regelung kann vermieden werden, dass ein mehrdeutiger Drehzahl-Leistungsast in der Drehzahl-Leistungsdarstellung entsteht. Mit anderen Worten kann dadurch jeder Drehzahl auf diesem Ast ein eindeutiger Leistungswert zugeordnet werden.

Sinngemäß kann bei abfallender Windgeschwindigkeit, wenn die Windenergieanlage den oberen Arbeitspunkt erreicht hat, die Generatorleistung als Stellgröße weiter abnehmen, die Drehzahl aber sogar etwas wieder zunehmen. Auch hier kommt als Beispiel in Betracht, dass die Generatorleistung dabei um 10 % abnimmt, während die Drehzahl um 1 % nur abnimmt. Es kann eine entsprechende Gerade bzw. linearer Zusammenhang dadurch festgelegt werden. Dabei würde mit anderen Worten einer Leistungsverringerung um 5 % eine Drehzahlerhöhung um 0,5 % zugeordnet werden usw. Das Gleiche gilt sinngemäß auch für einen Anstieg der Windgeschwindigkeit und damit einen Anstieg der Leistung ausgehend von unteren Arbeitspunkt.

Gemäß einem Aspekt wird vorgeschlagen, dass zum Wechseln zwischen dem unteren und oberen Arbeitspunkt eine Wechselzeit vorgegeben wird, die vorzugsweise kleiner als 20 Sekunden ist, insbesondere kleiner als 10 Sekunden ist. Außerdem oder alternativ wird vorgeschlagen, dass ein Zeitverlauf für die einzustellende Generatorzustandsgröße vorgegeben wird, um dadurch den Wechsel zu steuern.

Durch die Drehzahlleistungsregelung wird die Windenergieanlage in einem Arbeitspunkt, also mit einer etwa vorbestimmten Drehzahl, betrieben und gehalten. Dazu wird die Generatorleistung als Generatorzustandsgröße entsprechend eingestellt und ständig nachgeregelt. All dies kann natürlich auch mithilfe des Generatormomentes als Generatorzustandsgröße durchgeführt werden.

Soll nun zwischen den Arbeitspunkten gewechselt werden, also beispielsweise vom unteren Arbeitspunkt zum oberen Arbeitspunkt, so wird diese Generatorzustandsgröße, die also die Stellgröße der Drehzahlleistungsregelung bildet, zurückgenommen. Dadurch kann der Rotor beschleunigen. Je stärker diese Generatorzustandsgröße für den Wechsel vom unteren zum oberen Arbeitspunkt zurückgenommen wird, umso schneller kann der Wechsel vollzogen werden. Darüber kann also die Wechselzeit realisiert werden.

Bei der Wahl der Wechselzeit sind vorzugsweise auch Randbedingungen mit zu berücksichtigen, sodass also nicht ein beliebig schneller Wechsel das einzig sinnvolle Ziel sein muss. Auch Grenzwerte sind zu berücksichtigen. Insbesondere ist zu berücksichtigen, mit welchem Wert für die Generatorzustandsgröße nach dem Wechsel zu rechnen ist. So könnte beispielsweise der Wert der zu erwartenden Generatorzustandsgröße nach dem Wechsel auch für den Wechselvorgang eingestellt werden. Nach dem Wechsel wird dann direkt dieser Arbeitspunkt mit der zugehörigen Generatorzustandsgröße angesteuert.

Das kann allerdings zu einem zu langsamen Wechsel führen. Die Generatorzustandsgröße müsste also, bei einem Wechsel vom unteren zum oberen Arbeitspunkt, entsprechend geringer eingestellt werden. Wird sie zu gering eingestellt, um zu schnell zu wechseln, könnte sich ein Überschwinger dadurch ergeben, dass bei Erreichen der gewünschten Drehzahl nach dem Wechsel die Generatorzustandsgröße nicht schnell genug den gewünschten Wert erreicht. Entsprechend wird vorgeschlagen, eine Wechselzeit vorzugeben und die einzustellende Generatorzustandsgröße kann beispielsweise in einer Simulation bestimmt werden, oder aus Erfahrungswerten oder gezielten Versuchen.

Sinngemäß wird entsprechend auch beim Wechsel vom oberen zum unteren Arbeitspunkt vorgegangen, bei dem der Wert der Generatorzustandsgröße entsprechend angehoben wird, aber nicht zu stark angehoben werden sollte. Auch hierfür kann über die vorgeschlagene Vorgabe der Wechselzeit ein geeigneter Wert für die Generatorzustandsgröße bestimmt werden.

Somit wird zusätzlich oder alternativ vorgeschlagen, einen Zeitverlauf für die einzustellende Generatorzustandsgröße vorzugeben. Ein solcher Zeitverlauf kann für den Wechsel vom unteren zum oberen Arbeitspunkt besonders so aussehen, dass die Generatorzustandsgröße für eine bestimmte Zeit, insbesondere für die halbe Wechselzeit, kontinuierlich abfällt und für die verbleibende Zeit kontinuierlich ansteigt, nämlich insbesondere auf den Wert, der für den angesteuerten oberen Arbeitspunkt als sinnvoll bestimmt wurde, zum Beispiel berechnet oder durch eine Simulation bestimmt wurde.

Sinngemäß würde die Generatorzustandsgröße entsprechend erst ansteigen und dann abfallen, wenn von dem oberen Arbeitspunkt zum unteren Arbeitspunkt gewechselt werden soll.

Gemäß einem Aspekt wird vorgeschlagen, dass der Übergangsbereich im Teillastbereich in einem oberen Drehzahlbereich liegt, der durch Drehzahlen ab einer Übergangsdrehzahl gekennzeichnet ist. Der obere Drehzahlbereich liegt insbesondere oberhalb des Drehzahlvermeidungsbereichs, falls ein solcher existiert.

Dazu wird weiter vorgeschlagen, dass die Windenergieanlage durch eine Nenndrehzahl gekennzeichnet ist und die Übergangsdrehzahl wenigstens 80 %, insbesondere wenigstens 85 % der Nenndrehzahl und/oder einer Solldrehzahl der Pitchregelung beträgt. Insoweit wird hier vorgeschlagen, in diesem Übergangsbereich die Drehzahlleistungsregelung zu verwenden und damit für solche hohen Drehzahlen von 80 % oder 85 % der Nenndrehzahl bis zum Volllastbereich, also bis zu 100 % der Nenndrehzahl, die Drehzahlleistungsregelung zu verwenden. Die Pitchregelung, soweit sie aktiv ist, versucht die Drehzahl auf die Solldrehzahl zu regeln, nämlich mittels Pitchverstellung. Diese Solldrehzahl entspricht im Wesentlichen der Nenndrehzahl, aber sie kann evtl. in der konkreten Umsetzung besonders in der Regelungsstruktur besser berücksichtigt werden. Im Übrigen geht es um den Übergangsbereich vom Teillastbereich zum Volllastbereich, in dem der Pitchregelung der Drehzahlsollwert vorgegeben wird, so dass er eine sinnvolle Orientierung gibt. Die nachfolgenden Erläuterungen zur Nenndrehzahl gelten sinngemäß ebenso für die Solldrehzahl.

Hier wurde besonders erkannt, dass in diesem Drehzahlbereich von 80% bzw. 85% bis 100 % der Nenndrehzahl eine Betriebskennlinie sehr steil ist. Eine geringe Drehzahlveränderung führt also zu einer sehr großen Veränderung der Generatorzustandsgröße. Beispielsweise kann eine Erhöhung der Drehzahl um 1 % zu einer Erhöhung der Generatorzustandsgröße von 3 % oder mehr führen. Besonders zum Bereich von 95 bis 100 % der Nenndrehzahl kann eine Drehzahlveränderung um 1 % zu einer Veränderung der Generatorzustandsgröße um 5 % bis hin zu 10 % führen. Geringe Schwankungen der Windgeschwindigkeit führen somit zu geringen Veränderungen der Drehzahl und diese führen zu starken Veränderungen der Generatorzustandsgröße. Um diese Probleme in diesem speziellen Bereich zu adressieren, wird somit die Verwendung der Drehzahlleistungsregelung dort vorgeschlagen.

Es erfolgt also eine Drehzahlregelung, die sich aber von der Drehzahlregelung im Volllastbereich unterscheidet, weil sie nämlich die Generatorzustandsgröße, also die Generatorleistung oder das Generatormoment, als Stellgröße verwendet. Durch die vorgeschlagene Kaskadenregelung kann dabei zusätzlich die Rotorbeschleunigung und damit die Dynamik mit berücksichtigt werden. Besonders das ist durch die Verwendung der Betriebskennliniensteuerung nicht möglich, denn die Betriebskennliniensteuerung stellt lediglich zu einer erfassten Drehzahl die Generatorzustandsgröße, also die Generatorleistung oder das Generatormoment, ein. Wie schnell sich die Drehzahl dabei verändert, findet keine Berücksichtigung. Für geringe Drehzahlen, denen zudem üblicherweise auch geringe Windgeschwindigkeiten mit geringeren Schwankungen zugrunde liegen, kann das eine gute und bewährte Strategie sein. In dem beschriebenen steilen Bereich, in dem zudem auch mit stärkeren Windschwankungen zu rechnen ist, kann aber eine Verbesserung durch den Einsatz der Drehzahlleistungsregelung erreicht werden.

Gemäß einem Aspekt wird vorgeschlagen, dass für die Drehzahlleistungsregelung der Drehzahlsollwert über eine Übergangsdrehzahlkennlinie vorgegeben wird, die die bzw. eine Drehzahlkennlinie bildet, wobei für eine Drehzahl mit einem Drehzahlwert entsprechend der Übergangsdrehzahl die Übergangsdrehzahlkennlinie senkrecht verläuft, sodass mit steigender Generatorzustandsgröße die Drehzahl konstant ist, bis die Generatorzustandsgröße einen vorbestimmten ersten Generatorreferenzwert erreicht, der unterhalb eines Nennwertes der Generatorzustandsgröße liegt.

Somit wird für diesen Übergangsbereich nicht nur vorgeschlagen, statt der Betriebskennliniensteuerung die Drehzahlleistungsregelung einzusetzen, sondern es wird auch eine andere Drehzahlleistungskennlinie - bzw. Drehzahldrehmomentkennlinie - hinterlegt, die nämlich ab der Übergangsdrehzahl senkrecht verläuft. Das impliziert auch, dass bei steigender Windgeschwindigkeit ab Erreichen der Übergangsdrehzahl die Drehzahl zunächst nicht weiter erhöht wird. Die Anlage wird also dort im Vergleich zur Betriebskennlinie mit geringerer Drehzahl betrieben.

Hierdurch kann besonders erreicht werden, dass die Nenndrehzahl, ab der nämlich der Volllastbetrieb und damit die entsprechende Regelung beginnt, nicht zu früh erreicht wird. Besonders kann mit der Betriebskennliniensteuerung mit der sehr steilen Betriebskennlinie die Drehzahl durch Windschwankungen häufig die Nenndrehzahl erreichen. Dann ist zu prüfen, wie darauf zu reagieren ist, nämlich ob das die Drehzahlregelung aktiviert, die für den Volllastbetrieb vorgesehen ist. Es könnte sich ein häufiger Wechsel zwischen Betriebskennliniensteuerung und Pitchregelung ergeben, was durch die hier vorgeschlagene Lösung vermieden wird.

Außerdem oder alternativ kann vorgesehen sein, dass ab der Übergangsdrehzahl die Übergangsdrehzahlkennlinie noch eine positive Steigung hat und/oder dass sie ab dem ersten Generatorreferenzwert eine positive Steigung aufweist, sodass die Werte der Generatorzustandsgröße mit zunehmender Drehzahl zunehmen, bis ein Nennwert der Generatorzustandsgröße erreicht ist. Die Übergangsdrehzahlkennlinie so auszugestalten, dass sie ab der Übergangsdrehzahl eine positive Steigung aufweist und bis zur Nenndrehzahl reicht, ist nicht die bevorzugte Lösung, kann aber vorgesehen sein. Dann kann trotzdem vorgesehen sein, dass die Übergangsdrehzahlkennlinie sich in dem Bereich von der Betriebskennlinie unterscheidet. Insbesondere kann sie linear sein und damit oberhalb der Betriebskennlinie in diesem Bereich liegen. Die Drehzahl wird dann entlang dieser Übergangsdrehzahlkennlinie geregelt, nämlich mit dem vorgeschlagenen Drehzahlleistungsregler.

Besonders ist aber vorgesehen, dass ab der Übergangsdrehzahl die Übergangsdrehzahlkennlinie senkrecht verläuft, bis der Generatorreferenzwert erreicht wird, wobei von da an die Übergangsdrehzahlkennlinie eine positive Steigung aufweist. Vorzugsweise erreicht sie aber einen Nennwert der Generatorzustandsgröße, also eine Nennleistung oder ein Nennmoment, bevor die Drehzahl die Nenndrehzahl erreicht hat. Dadurch wird dann bereits im Teillastbereich dieser Nennwert der Generatorzustandsgröße erreicht und erst dann die Drehzahl bis zur Nenndrehzahl erhöht, um dann oder dabei in den Volllastbereich und die entsprechende Regelung im Volllastbereich überzugehen.

Gemäß einem Aspekt wird vorgeschlagen, dass eine Regelreserve in Abhängigkeit von einer Differenz zwischen eingestellter Generatorzustandsgröße und der oberen Generatorzustandsgrenze bestimmt wird. Die Differenz kann auch unmittelbar die Regelreserve bilden. Das hängt besonders davon ab, ob die Generatorzustandsgröße die gleiche physikalische Einheit aufweist wie die Regelreserve. Die Regelreserve kann besonders als Leistung ausgebildet sein. Ist die Generatorzustandsgröße als Drehmoment ausgebildet, kommt eine Umrechnung einer entsprechenden Differenz der Drehmomente in diese Regelreserve in Betracht. Besonders vorteilhaft ist es, wenn in der inneren Kaskade der erste Beschleunigungssollwert und der erfasste Beschleunigungsistwert mit derselben Einheit wie die Regelreserve vorgesehen sind.

Es wird weiter vorgeschlagen, dass die Regelreserve von der Drehzahlleistungsregelung an die Pitchregelung übertragen wird. Die Pitchregelung ist eine Drehzahlregelung, bei der der Blattwinkel die Stellgröße bildet. Insoweit liegen mit der Drehzahlleistungsregelung und der Pitchregelung zwei Drehzahlregelungen vor, die hierdurch aufeinander abgestimmt werden können.

Dabei wird weiter vorgesehen, dass die Drehzahlleistungsregelung und die Pitchregelung zumindest teilweise parallel arbeiten und über die Regelreserve aufeinander abgestimmt werden. Die Regelreserve ist dabei ein Indikator dafür, wie viel Stellleistung oder Stellenergie die Drehzahlleistungsregelung überhaupt noch zur Verfügung hat. Hat sie viel Stellenergie zur Verfügung, ist die Regelreserve dem Betrage nach groß. Dadurch kann der Pitchregelung signalisiert werden, dass die Drehzahlleistungsregelung also noch nicht an ihren Grenzen ist und noch regeln kann.

Hier wurde besonders erkannt, dass es vorteilhaft ist, beim Übergang vom Teillastbereich zum Volllastbereich zunächst der Drehzahlleistungsregelung das Regeln zu überlassen, soweit das möglich ist. Hierbei, wenn also die Pitchregelung übersteigende Windgeschwindigkeiten erst aktiviert wird, stehen die Rotorblätter noch aerodynamisch optimal, sind also noch nicht aus dem Wind herausgedreht. Wird in diesem Fall also die Pitchregelung aktiv, kann das nur bedeuten, dass sie die Blätter aus dem Wind herausstellt. Dadurch wird weniger Leistung aus dem Wind entnommen. Wenn dies zur Begrenzung der Anlagen und Belastung notwendig ist, sollte es auch durchgeführt werden; ist es aber noch nicht notwendig, kann es noch zurückgestellt werden. Genau das kann durch die Regelreserve erkannt werden und das kann dadurch der Pitchregelung signalisiert werden.

Die Pitchregelung erhält dabei nicht nur eine Information, ob die Drehzahlleistungsregelung noch über Stellenergie verfügt, sondern sie erhält auch eine Information über die Höhe. Dadurch kann der Übergang kontinuierlich erfolgen. Ist also noch viel Stellenergie vorhanden, ist also die Regelreserve dem Betrage nach noch groß, kann die Pitchregelung noch inaktiv bleiben. Ist die Regelreserve aber gering, gleichwohl aber noch vorhanden, kann die Pitchregelung bereits aktiv werden, während die Drehzahlleistungsregelung auch noch aktiv ist. Dann sind beide Drehzahlregelungen aktiv und über die Regelreserve sind sie aufeinander abgestimmt.

Hier wurde besonders auch erkannt, dass ein Übergang sinnvoll ist, statt zu warten, bis die Drehzahlleistungsregelung mangels Stellenergie gar nicht mehr regeln kann. Dadurch wird ein hartes Umschalten vermieden und die schnelle Regelfähigkeit der Drehzahlleistungsregelung kann noch genutzt werden.

Bei abfallender Windgeschwindigkeit funktioniert der Übergang von Pitchregelung zu Drehzahlleistungsregelung sinngemäß genauso. Der Betrieb kommt dann also aus dem Volllastbereich zum Teillastbereich und sobald erkannt wird, dass eine Regelreserve vorhanden ist, die Generatorleistung bzw. das Generatormoment also verringert werden kann, kann der Übergang einsetzen.

Grundsätzlich kann auch eine Umschaltung vorgesehen sein, die aber zumindest durch die Berücksichtigung der Regelreserve zu einem möglichst geeigneten Zustand oder einer möglichst geeigneten Situation durchgeführt werden kann.

Gemäß einem Aspekt wird vorgeschlagen, dass die Drehzahlleistungsregelung gegenüber der Pitchregelung priorisiert wird, insbesondere so, dass die Pitchregelung ganz oder teilweise unterdrückt wird, solange die Drehzahlleistungsregelung eine Stellgrößenbeschränkung nicht erreicht. Der Drehzahlleistungsregelung wird dann der Vorzug gegeben.

Außerdem oder alternativ wird vorgeschlagen, dass die Pitchregelung die Drehzahl zusätzlich in Abhängigkeit von einem Beschleunigungsistwert des Rotors steuert und eine Regelung der Drehzahl durch die Pitchregelung umso mehr unterdrückt wird, je weiter bei der Drehzahlleistungsregelung der Generatorsollwert unterhalb einer Generatorsollwertgrenze liegt.

Es wird also vorgeschlagen, die Drehzahlleistungsregelung ganz oder teilweise einzusetzen, solange sie auch wirksam sein kann. Das wurde vorstehend bereits erläutert. Es kann auch überprüft werden, ob die Drehzahlleistungsregelung eine Stellgrößenbeschränkung erreicht oder nicht. Erreicht sie die Stellgrößenbeschränkung, kann die Pitchregelung zugeschaltet oder in ihrem Anteil erhöht werden.

Die Pitchregelung kann gemäß dem einen Aspekt die Drehzahl zusätzlich in Abhängigkeit von einem Beschleunigungsistwert des Rotors steuern. Darüber kann besonders erkannt werden, ob oder wie stark in Kürze mit einer zu hohen Drehzahl zu rechnen ist, der dann die Pitchregelung entgegenwirken sollte. Dieses Entgegenwirken kann zusätzlich davon abhängig gemacht werden, wie weit die Drehzahlleistungsregelung noch in der Lage ist, dem entgegenzuwirken.

Besonders wird vorgeschlagen, die besondere Struktur der vorgeschlagenen Drehzahlleistungsregelung zu berücksichtigen und dort besonders die innere Kaskade zu berücksichtigen, die in Abhängigkeit von dem Vergleich zwischen erstem Beschleunigungssollwert und erfasstem Beschleunigungsistwert über den zweiten Regler den Generatorsollwert bestimmt.

Der Generatorsollwert bildet somit eine Stellgröße, die direkt oder indirekt auf den Generator wirken kann. Wie weit diese Stellgröße von einer Grenze entfernt ist, nämlich der Generatorsollwertgrenze, wird hier berücksichtigt, um die Pitchregelung entsprechend mehr oder weniger mit einzubeziehen. Ist der Generatorsollwert noch weit von der Generatorsollwertgrenze entfernt, kann die Pitchregelung stark unterdrückt werden. Nähert sich der Generatorsollwert der Generatorsollwertgrenze, kann die Pitchregelung entsprechend stärker mit zur Regelung hinzugenommen werden. Dies kann zur Bestimmung der Regelreserve verwendet und darüber der Pitchregelung zugeführt werden.

Gemäß einem Aspekt wird vorgeschlagen, dass die Drehzahlleistungsregelung zum Regeln der Drehzahl die Generatorzustandsgröße als Stellgröße verwendet, die somit als Generatorstellgröße bezeichnet wird, und die Pitchregelung zum Regeln der Drehzahl den Blattwinkel als Stellgröße verwendet, die somit als Pitchstellgröße bezeichnet wird, wobei die Blattwinkel insbesondere mit zunehmender Windgeschwindigkeit jeweils von einem Teillastblattwinkel, der in dem Teillastbereich eingestellt ist, zu einem Endwinkel hin vergrößert werden, wobei die Drehzahlleistungsregelung mit der Pitchregelung koordiniert wird, und insbesondere zum Koordinieren der Drehzahlleistungsregelung mit der Pitchregelung die Generatorstellgröße und die Pitchstellgröße miteinander koordiniert werden.

Eine solche Koordinierung kann besonders so aussehen, dass die in dem einen Regler verwendete Stellgröße bei dem anderen Regler abgezogen wird, gegebenenfalls unter entsprechender Umrechnung der relevanten Einheiten. Es kommt aber auch in Betracht, dass die beiden Regler so aufeinander abgestimmt sind, dass der Wert der Stellgröße des einen Reglers unmittelbar bei dem anderen Regler abgezogen werden kann. Dazu müssten die beiden Stellgrößen z.B. über eine Normierung aufeinander abgestimmt werden. Dadurch können beide Regler eine Drehzahlregelung durchführen, ohne sich aber gegenseitig zu kompensieren oder zu einer Überregelung zu führen, bei der sich die Stellgrößen beider Regler faktisch unkoordiniert aufaddieren.

Besonders wird vorgeschlagen, dass die Stellgrößenbeschränkung der Generatorstellgröße berücksichtigt wird und die Drehzahlleistungsregelung und die Pitchregelung so koordiniert werden, dass die Drehzahlleistungsregelung, solange sie die Stellgrößenbeschränkung nicht erreicht, einen größeren Einfluss auf die Drehzahl ausübt als die Pitchregelung. Die Drehzahlleistungsregelung geht also vor, solange sie ausreichend Stellgröße umsetzen kann.

Außerdem oder alternativ wird vorgeschlagen, dass die Pitchstellgröße in Abhängigkeit von der Stellgrößenbeschränkung der Generatorstellgröße eingestellt wird. Insbesondere ist dafür vorgesehen, dass eine Differenz zwischen der Generatorstellgröße und der Stellgrö-βenbeschränkung einen Stellbereich der Drehzahlleistungsregelung definiert und die Pitchstellgröße so verändert wird, dass die Pitchregelung einen umso geringeren Einfluss auf die Drehzahl hat, je größer der Stellbereich der Drehzahlleistungsregelung ist. Dadurch kann auf einfache Art und Weise eine Koordinierung dieser beiden Regler erreicht werden.

Insbesondere kann auf einfache Art und Weise dieser Stellbereich ermittelt und bei der Koordinierung berücksichtigt werden.

Gemäß einem Aspekt wird vorgeschlagen, dass die Pitchregelung so erfolgt, dass in einer äußeren Kaskade aus einem Vergleich einer vorgegebenen Solldrehzahl mit einer erfassten Istdrehzahl über einen dritten Regler ein zweiter Beschleunigungssollwert bestimmt wird, in einer inneren Kaskade aus einem Vergleich des zweiten Beschleunigungssollwertes mit einem erfasstem Beschleunigungssollwert über einen vierten Regler eine Stellgröße, insbesondere die Pitchstellgröße, zum Verstellen des Blattwinkels bestimmt wird, und dass der Vergleich des zweiten Beschleunigungssollwertes mit dem erfassten Beschleunigungswert einen Regelfehler bildet und der Regelfehler mittels der Regelreserve modifiziert wird, und der so modifizierte Regelfehler eine Eingangsgröße des vierten Reglers bildet.

Der vierte Regler ist also der Regler der inneren Kaskade der Pitchregelung. Diese innere Kaskade berücksichtigt einen Beschleunigungssoll-Zistwert-Vergleich. Sie berücksichtigt also, ob die erfasste Beschleunigung des Rotors der gewünschten Beschleunigung des Rotors entspricht. Ist das nicht der Fall, ergibt sich eine Differenz, die als Regelfehler bezeichnet werden kann. Diese führt dann durch den vierten Regler zu einer entsprechenden Reaktion, nämlich dem Verstellen der Blattwinkel. Der Abweichung zwischen gewünschter und erfasster Beschleunigung wird dadurch entgegengewirkt.

Zum Koordinieren dieser Pitchregelung mit dem Drehzahlleistungsregler wird nun vorgeschlagen, dass dieser Regelfehler, der die Beschleunigungsabweichung angibt, modifiziert wird. Veranschaulichend ausgedrückt braucht dieser Regelfehler der inneren Kaskade der Pitchregelung nicht über eine Pitchregelung ausgeregelt zu werden, wenn dies die Drehzahlleistungsregelung stattdessen über den Generator erreichen kann. Die Drehzahlleistungsregelung kann es dann über den Generator erreichen, wenn eine entsprechende Regelreserve vorhanden ist. Vorzugsweise ist diese Regelreserve in ihrer Dimensionierung auf die Beschleunigungsabweichung in der Pitchregelung abgestimmt. Die Regelreserve wird dann einfach von diesem Beschleunigungsregelfehler in der Pitchregelung abgezogen. Im Extremfall, wenn die Drehzahlleistungsregelung ausreichend Regelreserve hat, ergibt sich dann der Wert null und die Pitchregelung kann inaktiv sein.

Es kommt aber auch in Betracht, dass hierdurch der Regelfehler der Beschleunigung in der Pitchregelung nur verringert wird. Das führt dann dazu, dass der vierte Regler die Pitchstellgröße erzeugt bzw. verändert, nämlich so, dass gepitcht werden soll, aber nur in einem reduzierten Maße. Dadurch kann die Pitchregelung auf die Drehzahlleistungsregelung abgestimmt werden, nämlich derart, dass sie berücksichtigt, wie gut oder stark die Drehzahlleistungsregelung überhaupt noch agieren kann. Dafür steht die Regelreserve.

Vorzugsweise sind der Beschleunigungssollwert, der Beschleunigungsistwert und der resultierende Regelfehler der inneren Kaskade der Pitchregelung jeweils als Leistungswerte ausgebildet. Dadurch wird eine Koordination mit der Drehzahlleistungsregelung vereinfacht.

Es wird somit weiter vorgeschlagen, dass die Modifizierung insbesondere so erfolgt, dass das Verstellen des Blattwinkels verringert wird, im Vergleich dazu, wenn der Regelfehler nicht modifiziert wird, oder dass das Verstellen des Blattwinkels unterdrückt wird.

Außerdem oder alternativ wird vorgeschlagen, dass die Modifizierung insbesondere so erfolgt, dass die Regelreserve oder eine dazu äquivalente, insbesondere proportionale Größe, wirksam auf den Vergleich des zweiten Beschleunigungssollwertes mit dem erfassten Beschleunigungswert aufgeschaltet wird.

Eine solche Aufschaltung kommt besonders dann in Betracht, wenn die Pitchreglung den Beschleunigungssollwert und entsprechend auch den Beschleunigungsistwert, damit also auch den daraus resultierenden Regelfehler als Beschleunigungsleistung berücksichtigt, wie dies oben schon zum Drehzahlleistungsregler beschrieben wurde. Die Beschleunigungsleistung gibt also auch hier die Leistung an, die benötigt wird, um die entsprechende Beschleunigung zu erreichen. In diesem Fall kann die Regelreserve einen Leistungswert bilden, der nämlich angibt, wie viel Regelleistung die Drehzahlleistungsregelung noch zur Verfügung hat. Genau dieser Leistungswert wird dann von dem Beschleunigungsregelfehler der Pitchregelung, der dann nämlich ebenfalls eine Leistung ist, abgezogen.

Dadurch ergibt sich eine einfache Regelungsstruktur, bei der die Regelreserve einfach nur in der Drehzahlleistungsregelung generiert und bei der Pitchregelung aufgeschaltet zu werden braucht, also mit negativem Vorzeichen, um dadurch abgezogen zu werden. Natürlich ist auch eine andere, dann wahrscheinlich kompliziertere Umsetzung möglich.

Gemäß einem Aspekt wird vorgeschlagen, dass in der Drehzahlleistungsregelung der erste Beschleunigungssollwert, der in Abhängigkeit von einem Vergleich der vorgegebenen Solldrehzahl mit einer erfassten Istdrehzahl bestimmt wird, zusätzlich in Abhängigkeit von einem Blattwinkel verändert wird. Das erfolgt insbesondere so, dass der erste Beschleunigungssollwert um einen Aufschaltwert vergrößert wird, wobei der Aufschaltwert in Abhängigkeit von einem Differenzwinkel als Differenz zwischen aktuellem Blattwinkel und dem Teillastblattwinkel bestimmt wird, insbesondere proportional dazu bestimmt wird.

Zunächst ist zu beachten, dass im Teillastbereich ein konstanter Teillastblattwinkel eingestellt sein sollte. Im Übergangsbereich zum Vollastbereich hin kann aber, nämlich durch die Pitchregelung, eine Abweichung vorliegen. Das bedeutet auch, dass die Pitchreglung bereits zumindest teilweise aktiv ist. Das wird nun dadurch berücksichtigt, dass der Differenzwinkel, der also durch die Pitchreglung eingestellt wurde, berücksichtigt wird.

Diese Berücksichtigung erfolgt in der Drehzahlleistungsregelung bei der Bestimmung des Beschleunigungssollwertes. Hier wird besonders vorgeschlagen, dass dieser erhöht wird, wenn ein solcher Differenzwinkel festgestellt wurde. Insbesondere wird er umso stärker erhöht, je größer dieser Differenzwinkel ist, also dem Betrage nach ist.

Diese Erhöhung des Beschleunigungssollwertes hat zur Folge, dass die Drehzahlleistungsregelung diesen erhöhten Beschleunigungssollwert auszuregeln versucht, sie versucht also durch entsprechende Einstellung der Generatorzustandsgröße, also der Generatorleistung bzw. des Generatormoments, diesen Beschleunigungssollwert zu erreichen. Dadurch kann die Drehzahlleistungsregelung dann aber eine Begrenzung erreichen. Das kann auch so bezeichnet werden, dass sie in eine Sättigung geht. Das kann dann wiederum bedeuten, dass eine geringere oder gar keine Regelreserve erkannt wird. Diese Regelreserve bzw. entsprechend geringere Regelreserve oder nicht vorhandene Regelreserve kann bei entsprechender Implementierung auf die Pitchregelung zurückwirken und sie dadurch aktivieren bzw. ihren Einfluss erhöhen, gegebenenfalls bis 100 %, sodass die Drehzahlleistungsregelung dann nicht mehr wirkt. Dadurch kann auf einfache Art und Weise die Drehzahlleistungsregelung bei aktiver Pitchregelung zurückgefahren werden.

Gemäß einem Aspekt wird vorgeschlagen, dass eine Kennlinienverschiebung durchgeführt wird, bei der in Abhängigkeit von einem Betriebspunkt, insbesondere in Abhängigkeit von einem Verhalten einer Pitchregelung, insbesondere in Abhängigkeit von einem eingestellten Blattwinkel die Betriebskennlinie so verschoben wird, dass bei gleicher Drehzahl ein höherer Wert der Generatorzustandsgröße eingestellt wird. Bei einer Darstellung der Betriebskennlinie so, dass die Drehzahl an der Abszisse und die Generatorzustandsgröße, also die Generatorleistung oder das Generatormoment, an der Ordinate abgetragen wird, wird die Betriebskennlinie somit nach links verschoben.

Die Betriebskennlinie ist zur Steuerung der Windenergieanlage im Teillastbereich vorgesehen, aber beim Übergang zum Volllastbereich und böigem Wind kann die Pitchregelung ansprechen, während die Betriebskennliniensteuerung ebenfalls aktiv ist. In einem solchen Betriebspunkt ist die Verschiebung der Betriebskennlinie vorgesehen.

Hier wurde besonders erkannt, dass bei solchem böigen Wind die Windgeschwindigkeit schnell um eine Durchschnittswindgeschwindigkeit schwanken kann. Die Pitchregelung ist oftmals nicht in der Lage, die schnellen Schwankungen auszuregeln, sodass Drehzahlschwankungen resultieren können. Dabei kann die Drehzahl auch unter die Nenndrehzahl abfallen, was zu einer Reaktion der Betriebskennliniensteuerung führen kann, die nämlich mit fallender Drehzahl die Leistung reduziert. Da die Betriebskennlinie für hohe Drehzahlen besonders steil ist, können schon geringe Drehzahländerungen zu starken Leistungsänderungen führen. Fällt die Drehzahl unter die Nenndrehzahl, kann das zu starken Verringerungen der Leistung führen, nämlich auf Werte unterhalb der Nennleistung, obwohl die durchschnittliche Drehzahl gar nicht unterhalb der Nenndrehzahl liegen muss.

Durch das Verschieben der Betriebskennlinie wird das vermieden. Es wurde erkannt, dass besonders aus dem Verhalten der Pitchregelung die beschriebene Situation erkannt werden kann. Sie ist dabei besonders aus dem Blattwinkel ableitbar, der durch die Pitchregelung vorgegeben wird.

Daher wird insbesondere vorgeschlagen, dass die Betriebskennlinie um eine vorbestimmte oder einstellbare Verschiebungsdrehzahl verschoben wird, die insbesondere in einem Bereich von 0,3 bis 1,5 U/min, vorzugsweise in einem Bereich von 0,5 bis 1 U/min liegt. Bei einer Verschiebung um 1,5 U/min wird somit erreicht, dass die Drehzahl um bis zu 1,5 U/min unter die Nenndrehzahl abfallen kann, ohne dass die Betriebskennlinie zu einer Verringerung der Leistung führt.

Bei geringen Drehzahlen hat eine solche Verschiebung somit wenig Auswirkung, bei hohen Drehzahlen, wenn die Betriebskennlinie sehr steil ist, hat dies jedoch eine stärkere Auswirkung. Es führt auch dazu, dass bei hohen Drehzahlen in der Nähe der Nenndrehzahl der Nennwert der Generatorzustandsgröße, also die Nennleistung oder das Nennmoment, schon bei einer etwas geringeren Drehzahl als Nenndrehzahl erreicht wird. Dadurch kann verhindert werden, dass bei schwankender Windgeschwindigkeit und entsprechend schwankender Drehzahl trotz ausreichend hoher Windgeschwindigkeit, nämlich im Bereich der Nennwindgeschwindigkeit, immer wieder eine geringere Leistung als die Nennleistung bzw. ein geringeres Moment als Nennmoment eingestellt wird.

Besonders wird vorgeschlagen, dass die Kennlinienverschiebung in Abhängigkeit von einer Überschreitung des Teillastblattwinkels durchgeführt wird, insbesondere in Abhängigkeit von einem Überschreitungswert, um den der Blattwinkel den Teillastwinkel überschreitet.

Solange der Blattwinkel den Teillastwinkel aufweist, ist die Pitchregelung noch nicht aktiv geworden. Wird er überschritten, ist sie aktiv geworden und eine Kennlinienverschiebung kommt in Betracht. Bei geringen Überschreitungen des Teillastwinkels, z.B. von nur 1°, muss aber noch nicht von einer starken Böigkeit ausgegangen werden. Daher wird die Kennlinienverschiebung von einem Überschreitungswert abhängig gemacht.

Die Kennlinienverschiebung wird besonders erst dann durchgeführt, wenn der Überschreitungswert einen Überschreitungsmindestwert erreicht, der insbesondere im Bereich von 2° bis 5° liegt.

Es kann zusätzlich oder alternativ vorgesehen sein, dass der Überschreitungswert quantitativ bewertet wird, und abhängig von dem Überschreitungswert die Verschiebungsdrehzahl eingestellt wird.

Der Überschreitungswert ermöglicht damit eine Bewertung der Böigkeit und davon abhängig kann die Verschiebungsdrehzahl entsprechend gewählt werden, nämlich umso größer, je größer der Überschreitungswert ist.

Erfindungsgemäß wird auch eine Windenergieanlage vorgeschlagen. Eine solche Windenergieanlage weist einen aerodynamischen Rotor auf, der mit variabler Drehzahl betrieben wird und der in ihrem Blattwinkel verstellbare Rotorblätter aufweist. Außerdem weist die Windenergieanlage eine Steuereinrichtung zum Steuern der Windenergieanlage auf. Die Steuereinrichtung ist dazu vorbereitet, die Windenergieanlage mittels eines Verfahrens zum Steuern einer Windenergieanlage gemäß wenigstens einer der vorstehend beschriebenen Ausführungsformen zu steuern.

Das bedeutet besonders, dass die Steuereinrichtung wenigstens einen Prozessrechner aufweisen kann, auf dem das Verfahren implementiert ist. Insbesondere sind dazu eine oder mehrere Betriebskennlinien hinterlegt und es ist eine Betriebskennliniensteuerung implementiert, die in Abhängigkeit von der erfassten Drehzahl eine entsprechende Generatorzustandsgröße der betreffenden Betriebskennlinie entnimmt und die Windenergieanlage entsprechend einstellt.

Besonders hat die Steuereinrichtung Zugriff auf den Generator der Windenergieanlage und kann seine Leistungsabgabe und/oder sein Generatormoment einstellen. Außerdem hat die Steuereinrichtung Zugriff auf Verstellvorrichtungen zum Verstellen der Blattwinkel der Rotorblätter.

Außerdem ist eine Drehzahlleistungsregelung in der Steuereinrichtung implementiert und diese kann Istwerte empfangen und ebenfalls den Generator und die Blattverstelleinrichtung ansteuern.

Insbesondere ist die Drehzahlleistungsregelung so implementiert, dass sie sowohl einen Drehzahlistwert als auch einen Drehzahlsollwert empfangen kann und dass sie auch einen Beschleunigungsistwert empfangen oder aus einer empfangenen Drehzahl berechnen kann.

Erfindungsgemäß wird auch ein Windpark vorgeschlagen, der mehrere Windenergieanlagen aufweist. Eine, mehrere oder alle dieser Windenergieanlagen sind als Windenergieanlage gemäß wenigstens einer vorstehend beschriebenen Ausführungsform ausgebildet. Besonders dadurch, dass mehrere oder sogaralle der Windenergieanlagen des Windparks wenigstens ein vorstehend beschriebenes Verfahren zum Steuern der Windenergieanlage verwenden, kann ihr Betrieb aufeinander abgestimmt werden. Dabei ist besonders zu beachten, dass etwaige oszillierende Verhalten der Windenergieanlagen sich auch gegenseitig auf die Windenergieanlagen auswirken können. Dadurch kann eine bessere Unterdrückung solcher Oszillationen durch die vorgeschlagenen Verfahren als auch ein stetigeres Verhalten der Windenergieanlagen durch wenigstens eines der vorstehend vorgeschlagenen Verfahren zu einem günstigen Verhalten des Windparks insgesamt führen. Insbesondere ist ein Windpark eine Anordnung von Windenergieanlagen, die über denselben Netzanschlusspunkt in das elektrische Versorgungsnetz einspeisen. Durch die vorgeschlagenen Verfahren kann auch diese Einspeisung gleichmäßiger und mit weniger Oszillationen erfolgen.

Die Erfindung wird nun nachfolgend beispielhaft unter Bezugnahme auf die begleitenden Figuren näher ausgeführt.
- Figur 1: zeigt eine Windenergieanlage in einer perspektivischen Darstellung.
- Figur 2: zeigt einen Windpark in einer schematischen Darstellung.
- Figur 3: zeigt eine Drehzahlleistungsregelung und eine Pitchregelung jeweils in einer vereinfachten schematischen Darstellung.
- Figur 4: zeigt ein Drehzahl-Leistungs-Diagramm zum Veranschaulichen des vorge-schlagenen Steuerverfahrens.
- Figur 5: zeigt ein Zeit-Leistungs-Diagramm zum Veranschaulichen eines Übergangs zwischen einem oberen und einem unteren Betriebspunkt.
- Figur 6: zeigt eine Drehzahl-Leistungsregelung in einer gegenüber Figur 3 erweiterten Struktur.

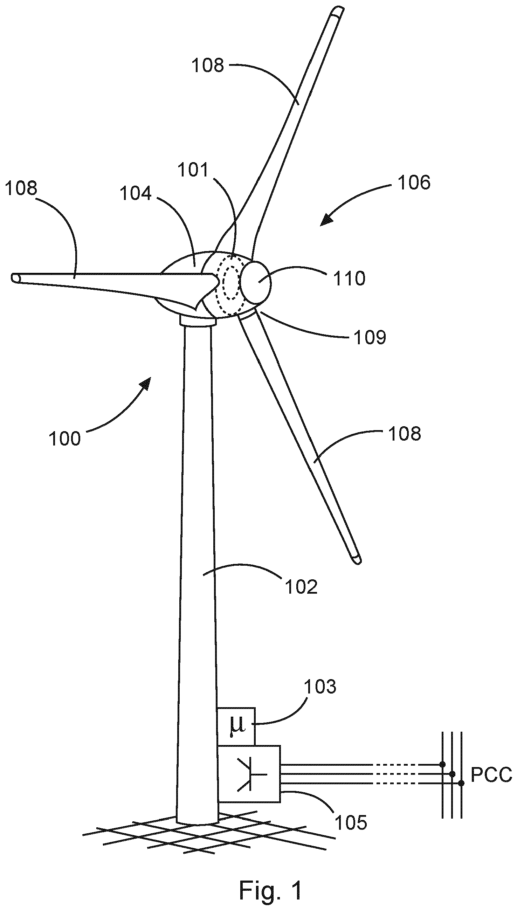

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

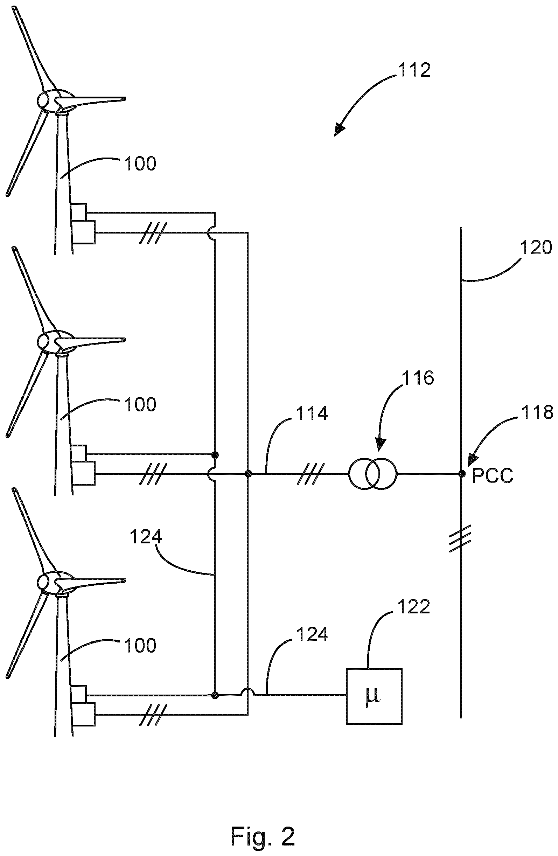

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112.

Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Figur 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

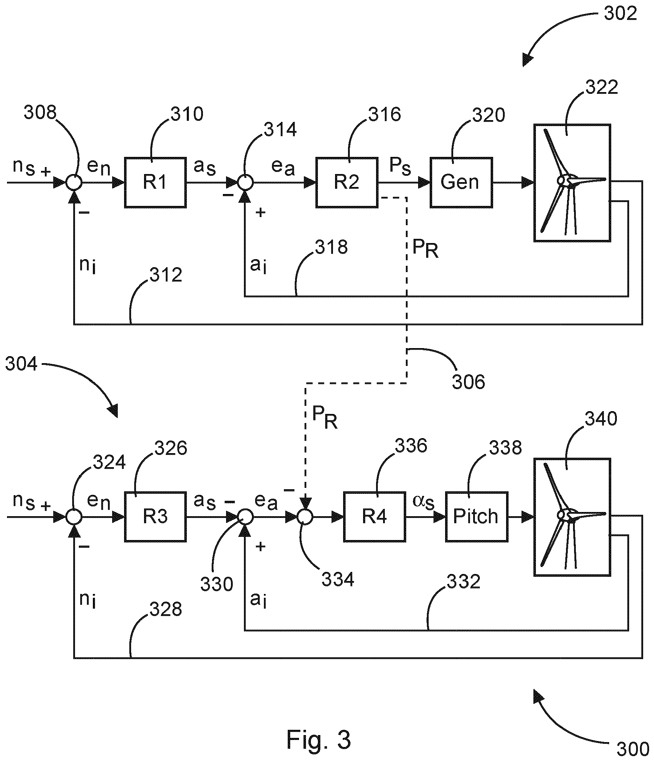

Figur 3 zeigt eine vereinfachte Regelungsstruktur 300. Sie weist in ihrem oberen Teil eine Drehzahlleistungsregelung 302 auf. In dem unteren Teil weist sie eine Pitchregelung 304 auf. Die Drehzahlleistungsregelung 302 und die Pitchregelung 304 können über eine gestrichelt dargestellte Kopplungsverbindung 306 gekoppelt werden, was unten noch weiter erläutert wird. Grundsätzlich können aber beide Regler unabhängig voneinander arbeiten, sodass die Kopplungsverbindung 306 nur gestrichelt dargestellt ist. Sie ist zumindest gemäß einer Ausführungsform vorgesehen.

Die Drehzahlleistungsregelung 302 weist eine erste Summierstelle 308 auf, an der ein Soll-Istwert-Vergleich zwischen der Solldrehzahl nₛ und der Istdrehzahl nᵢ durchgeführt wird. Der sich ergebende Regelfehler eₙ wird in den ersten Regler 310 gegeben. Die Istdrehzahl nᵢ wird an der Windenergieanlage erfasst und über eine äußere Rückführung 312 zurückgeführt und auf die erste Summierstelle 308 gegeben. Die erste Summierstelle 308, der erste Regler 310 und die äußere Rückführung 312 können als wesentliche Bestandteile einer äußeren Kaskade des Drehzahlleistungsreglers angesehen werden.

Der erste Regler 310 bestimmt basierend auf dem Regelfehler eₙ einen ersten Beschleunigungssollwert aₛ. Dieser wird an der zweiten Summierstelle 314 von einem Beschleunigungsistwert aᵢ abgezogen, sodass sich der innere Regelfehler eₐ ergibt. Somit erfolgt an der zweiten Summierstelle ein Soll-Istwert-Vergleich mit negativem Vorzeichen. Im Grunde ist es nur eine Frage der Nomenklatur und dürfte, anschaulich gesprochen, dem Umstand geschuldet sein, dass bei einem Generator ein Generatormoment gesteuert wird, das bremst, einer Beschleunigung also entgegenwirkt. Das ist der Grund für die gewählten Vorzeichen an der zweiten Summierstelle 314.

Der sich ergebende innere Regelfehler eₐ wird auf den zweiten Regler 316 gegeben, der daraus einen Generatorsollwert bestimmt, der als Generatorsollmoment oder, wie in der in Fig. 3 gezeigten Variante als Leistungssollwert Pₛ ausgebildet sein kann. Der Beschleunigungsistwert aᵢ wird der zweiten Summierstelle 314 durch eine innere Rückführung 318 zugeführt. Die zweite Summierstelle 314, der zweite Regler 316 und die innere Rückführung 318 können als wesentliche Elemente der inneren Kaskade des Drehzahlleistungsreglers 302 angesehen werden.

Die betrachteten Beschleunigungswerte, also der erfasste Beschleunigungswert aᵢ und der vorgegebene Beschleunigungswert aₛ, werden vorzugsweise als Leistungswerte berücksichtigt. Dabei beschreibt eine Beschleunigungsleistung, die als Wert des entsprechenden Beschleunigungswertes verwendet wird, wie viel Leistung zum Erreichen der entsprechenden Beschleunigung aufgebracht werden muss, bzw. wie viel Leistung durch ein entsprechendes Abbremsen abgegeben werden würde.

Trotzdem ist es erforderlich, aus der inneren Regelabweichung eₐ, auch wenn sie bereits ihrer physikalischen Einheit nach eine Leistung ist, durch den zweiten Regler 316 in den Leistungssollwert Pₛ zu überführen. Details dazu werden unten noch beschrieben.

Jedenfalls wird der so bestimmte Leistungssollwert Pₛ in den Generator 320 gegeben und das entfaltet dadurch Wirkung auf die im Windenergieanlagenblock 322 veranschaulichte Windenergieanlage. Die Darstellung des Generators 320 als eigenem Block dient im Wesentlichen der Veranschaulichung. Tatsächlich ist der Generator 320 natürlich Teil der Windenergieanlage. Besonders aber die Abgrenzung zur Pitchregelung 304 soll hierdurch verdeutlicht werden.

Im Betrieb der Windenergieanlage kann diese somit gemäß einer Betriebskennliniensteuerung betrieben werden. Zu bestimmten Drehzahlen oder Drehzahlbereichen, was unten noch erläutert wird, wird aber die gezeigte Drehzahlleistungsregelung 302 vorgesehen. Wenn diese aktiviert ist, erhält sie somit einen entsprechenden Drehzahlsollwert. Der kann fest sein oder Teil einer speziellen Kennlinie sein.

Im zur Veranschaulichung am besten geeigneten Fall liegt ein konstanter Drehzahlsollwert nₛ vor. Durch Schwankungen der Windgeschwindigkeit schwankt die Istdrehzahl und es ergibt sich an der ersten Summierstelle 308 ein äußerer Regelfehler eₙ.

Der äußere Regelfehler führt dann durch den ersten Regler 310 zu einem Beschleunigungssollwert aₛ. Dieser Beschleunigungssollwert wird aber nicht unmittelbar in eine Generatorleistung oder ein Generatormoment überführt, sondern es wird erst geprüft, wie groß überhaupt ein Unterschied zu einem vorhandenen Beschleunigungswert ist. Es ergibt sich der innere Regelfehler eₐ, aus dem dann mittels des zweiten Reglers 316 der Leistungssollwert Pₛ bestimmt wird und auf den Generator 320 gegeben wird. Dadurch wird die Beschleunigung des Rotors entsprechend verändert und dadurch die Drehzahl der vorgegebenen Drehzahl nachgeregelt.

Wenn also im Teillastbereich eine Drehzahlregelung durchgeführt werden soll, wird diese Drehzahlleistungsregelung 302 verwendet. Die Drehzahl wird dadurch geregelt und dadurch ergibt sich auch eine entsprechende Abgabeleistung des Generators, die nicht nur zum Regeln verwendet wird, sondern auch als aus dem Wind erzeugte Leistung abgegeben wird. Diese Drehzahlleistungsregelung kann unabhängig von der Pitchregelung 304 vorgesehen sein, besonders dann, wenn diese Drehzahlleistungsregelung 302 dazu verwendet wird, bei einem Drehzahlvermeidungsbereich eine untere oder obere Vermeidungsdrehzahl zu regeln. Besonders für Drehzahlen unterhalb eines oberen Drehzahlbereichs, also nicht in der Nähe einer Nenndrehzahl, kommt die Drehzahlleistungsregelung 302 ohne Verknüpfung mit der Pitchregelung 304 aus, die in dem Fall nämlich noch inaktiv ist.

Besonders in einem oberen Drehzahlbereich kommt aber eine Verknüpfung mit der Pitchregelung 304 in Betracht. Die Pitchregelung 304 ist ähnlich der Drehzahlleistungsregelung 302 aufgebaut. Die Pitchregelung 304 verfügt auch über eine äußere Kaskade, die eine dritte Summierstelle 324 aufweist, an der ein Soll-Istwert-Vergleich der Drehzahlen durchgeführt wird, um einen äußeren Regelfehler eₙ zu erzeugen und auf den dritten Regler 326 zu geben. Auch für die Istdrehzahl nᵢ ist eine äußere Rückführung 328 vorgesehen.

Der dritte Regler 326 erzeugt dann einen Beschleunigungssollwert aₛ, der an der vierten Summierstelle 330 mit der Istbeschleunigung aᵢ verglichen wird. Die Istbeschleunigung aᵢ wird dabei über die innere Rückführung 332 der vierten Summierstelle 330 zugeführt. Es ergibt sich ein innerer Regelfehler eₐ.

Die fünfte Summierstelle 334 kann inaktiv sein und wird nur für die Koordinierung der Drehzahlleistungsregelung 302 und der Pitchregelung 304 benötigt. Ist diese fünfte Summierstelle 314 inaktiv, wird der innere Regelfehler eₐ unmittelbar auf den vierten Regler 336 gegeben. Insoweit entspricht die Struktur, zumindest dem Grunde nach, noch der Drehzahlleistungsregelung 302, weswegen auch einige Bezeichnungen identisch gewählt wurden.

Der vierte Regler 336 erzeugt dann aber einen Sollwert für die Blattwinkel αₛ, der entsprechend auf ein Pitchsystem 338 gegeben wird. Die Blätter werden also mittels des Pitchsystems 338 so verstellt, dass der Beschleunigungsistwert dem Beschleunigungssollwert angeglichen wird, um dadurch auch einen Angleich der Istdrehzahl und der Solldrehzahl zu erreichen. Insoweit wirkt das Pitchsystem auf den Windenergieanlagenblock 340, der dem Windenergieanlagenblock 322 entsprechen könnte. Auch hier ist das Pitchsystem 338 natürlich Teil der Windenergieanlage und im Übrigen kann auch die gesamte Regelung als Teil der Windenergieanlage angesehen werden. Insoweit dient auch hier der Windenergieanlagenblock 340 der Veranschaulichung, dass nämlich das Pitchsystem 338 auf die Windenergieanlage wirkt. Damit wirkt die Pitchregelung durch die Vorgabe des Sollwinkels αₛ auf die Windenergieanlage.

Trotz ähnlicher Strukturen der Drehzahlleistungsregelung 302 und der Pitchregelung 304 verwenden die beiden Regelungen aber unterschiedliche Stellgrößen. Die Drehzahlleistungsregelung 302 verwendet eine Generatorleistung oder ein Generatormoment als Stellgröße, wohingegen die Pitchregelung 304 eine Blattverstellung als Stellgröße verwendet. Das wird natürlich auch in den entsprechenden Reglern, insbesondere in dem zweiten bzw. vierten Regler 316, 336, berücksichtigt.

Die beiden Strukturen sind aber insoweit ähnlich gewählt, als der Soll-Istwert-Vergleich im zweiten Summierglied 314 als auch im vierten Summierglied 330 insoweit gleich sein können, dass sie auf derselben physikalischen Einheit für die Beschleunigung aufbauen können. Besonders wird vorgeschlagen, dass in beiden Fällen die Beschleunigungswerte als Leistungen betrachtet werden. Dadurch wird eine Kopplung bzw. Koordinierung der Drehzahlleistungsregelung 302 mit der Pitchregelung 304 möglich.

Der zweite Regler 316 bestimmt dafür eine Regelreserve P_{R} und gibt diese aus. Die Regelreserve P_{R} sagt aus, wie viel Leistung der Drehzahlleistungsregelung 302 zum Regeln zur Verfügung steht. Gibt die Windenergieanlage beispielsweise bereits Maximalleistung ab, wäre die Reserveleistung null, um einen Extremfall zu nennen. An der fünften Summierstelle 334 liegt dann der Wert null an, verändert also die Pitchregelung gar nicht. Die Pitchregelung würde dann ganz normal zum Reduzieren der Rotorbeschleunigung die Rotorblätter entsprechend aus dem Wind verstellen, Gleichzeitig würde die Drehzahlleistungsregelung 302 keine Veränderung hervorrufen können, da ihre Stellgröße, nämlich die Generatorleistung (was auch das Generatormoment sein könnte), bereits an einer Grenze ist, was auch als Sättigung bezeichnet werden kann. In diesem Fall wäre faktisch nur noch die Pitchregelung 304 aktiv, und das zu 100 %, wohingegen die Drehzahlleistungsregelung 302 nicht mehr aktiv wäre. Allerdings könnte sich das beispielsweise bei abfallendem Wind schnell wieder ändern.

Ist aber eine Regelreserve vorhanden, wird diese an der fünften Summierstelle 334 von der Soll-Istwert-Differenz abgezogen. Dieser innere Regelfehler eₐ ist somit die Rotorbeschleunigung, die nach dem Soll-Istwert-Vergleich verbleibt und ausgeregelt werden müsste. Dazu wird sie in den vierten Regler 336 gegeben. Hat aber die Drehzahlleistungsregelung 302 noch ausreichend Regelreserve zur Verfügung, wird diese von der auszuregelnden Beschleunigung abgezogen. Im Extremfall kann das bedeuten, dass dies bis auf null abgezogen wird. In diesem Extremfall wäre nur die Drehzahlleistungsregelung 302 aktiv, die Pitchregelung 304 aber nicht.

Es kann natürlich auch sein, dass die Regelreserve P_{R} deutlich größer als der Ausgang der vierten Summierstelle 330 ist. Der Ausgang der fünften Summierstelle 334 würde dann negativ werden. Aufgrund von Begrenzungen würde dies dennoch nicht zu einem in die andere Richtung weisenden Blattwinkel bzw. Blattwinkelverstellung führen. Hier ist besonders zu berücksichtigen, dass die Drehzahlleistungsregelung 302 und die Pitchregelung 304 besonders im Übergangsbereich vom Teillastbereich zum Volllastbereich überlappend arbeiten können. Ganz am Anfang des Volllastbereichs stehen die Rotorblätter aber noch optimal im Wind. Die Pitchregelung kann dann die Rotorblätter nur in eine Richtung verdrehen. Ein negativer Ausgangswert an der fünften Summierstelle 334 würde in dem Fall zu keiner Wirkung führen. Andererseits, wären die Rotorblätter allerdings bereits etwas aus dem Wind gedreht, könnte ein negativer Ausgangswert an der fünften Summierstelle 334 dazu führen, dass die Blätter wieder voll in den Wind gedreht werden.

Dies waren nur einige anschauliche Beispiele, um das Grundprinzip zu erläutern. Die detaillierten Steuerungsschritte können natürlich von weiteren Einzelheiten abhängen, einschließlich von Integralanteilen besonders in dem zweiten Regler.

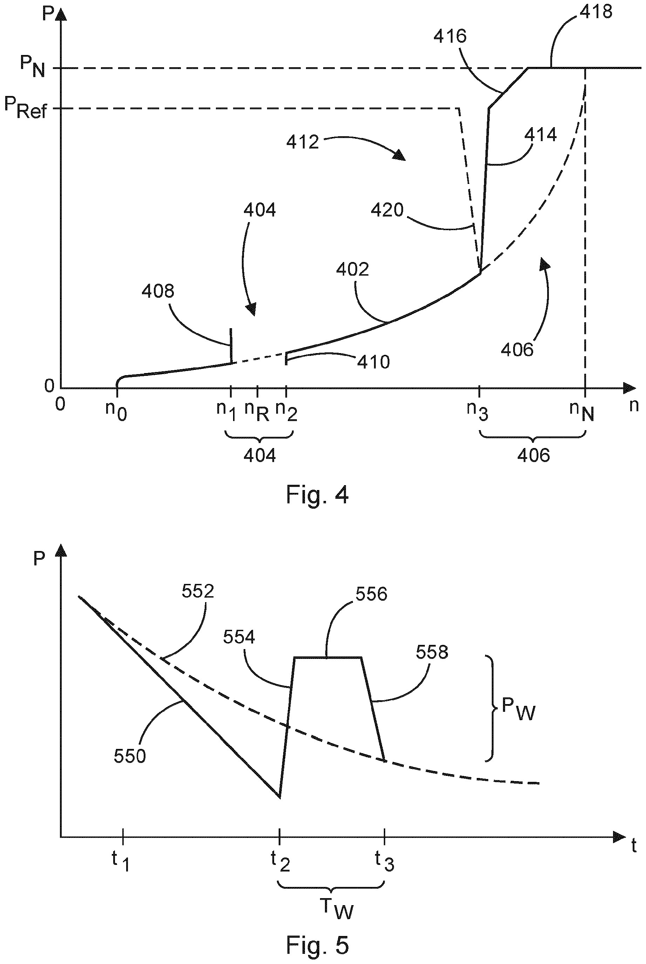

Figur 4 zeigt ein Drehzahl-Leistungsdiagramm, in dem die Generatorleistung P über die Drehzahl n des Rotors aufgetragen ist. Dabei ist beginnend mit der Anlaufdrehzahl n₀ eine Drehzahl-Leistungs-Kennlinie gezeigt, die streng monoton steigend bis zum Erreichen der Nenndrehzahl n_{N} bei Nennleistung P_{N} ansteigt und eine Betriebskennlinie 402 bildet. Diese Betriebskennlinie ist in einem Drehzahlvermeidungsbereich 404 unterbrochen, was dort durch die gepunktete Linie angezeigt ist. Außerdem wird vorgeschlagen, in einem oberen Drehzahlbereich 406 die Betriebskennlinie ebenfalls nicht zum Steuern der Windenergieanlage zu verwenden, sodass sie dort nur gestrichelt dargestellt ist.

Der Drehzahlvermeidungsbereich 404 fasst im Grunde eine Resonanzstelle ein. An dieser Resonanzstelle kann eine Resonanzfrequenz der Windenergieanlage durch die eingezeichnete Resonanzdrehzahl n_{R} angeregt werden. Daher soll die Windenergieanlage möglichst nicht mit dieser Drehzahl betrieben werden.

Bei steigender Windgeschwindigkeit erhöht sich somit die Drehzahl gemäß der Betriebskennlinie 402 beginnend von der Anlaufdrehzahl n₀ nach und nach, je nach Anstieg der Windgeschwindigkeit. Je nachdem, welche Drehzahl sich einstellt, wird gemäß der Betriebskennlinie 402 eine zugeordnete Leistung eingestellt.

Erreicht die Drehzahl die untere Vermeidungsdrehzahl n₁, wird eine Drehzahlleistungsregelung eingeschaltet, wie sie als Drehzahlleistungsregelung 302 in Fig. 3 gezeigt ist. Die Kopplungsverbindung 306 ist hier nicht von Bedeutung und kann entweder weggelassen werden oder wird keine Wirkung entfalten. Erhöht sich nun die Windgeschwindigkeit weiter, würde dies zu einer Erhöhung der Drehzahl führen, wobei nun aber die Drehzahlleistungsregelung dem entgegenwirkt. Sie arbeitet wie im Zusammenhang mit Fig. 3 erläutert, wobei die untere Vermeidungsdrehzahl n₁ als Solldrehzahl nₛ eingegeben werden kann, dann also auf die erste Summierstelle 308 gegeben wird.

Im Ergebnis steigt die Leistung an, um dadurch der Beschleunigung des Rotors entgegenzuwirken. Dies ist besonders gut durch die vorgeschlagene Kaskadenregelung realisierbar, die in der äußeren Kaskade einen Beschleunigungssollwert bestimmt und diesen in der inneren Kaskade ausregelt. Dadurch ergibt sich der dargestellte linke Ast 408. Je größer die Windgeschwindigkeit dann wird, umso höher steigt dieser senkrechte Ast 408 an.

Es kann dann vorgesehen sein, von dem linken Ast 408 zum rechten Ast 410 bei der oberen Vermeidungsdrehzahl n₂ zu wechseln. Steigt die Windgeschwindigkeit dann weiter an, bewegt sich der Arbeitspunkt auf dem rechten Ast 410 weiter nach oben, bis die Betriebskennlinie 402 erreicht ist. Steigt die Windgeschwindigkeit dann noch weiter an, bewegt sich der Arbeitspunkt auf der Betriebskennlinie 402 weitere in Richtung höherer Drehzahlen und auch höherer Leistung.

Das Wechseln vom linken zum rechten Ast, bzw. bei abfallender Windgeschwindigkeit umgekehrt, kann von Grenzwerten abhängen. Besonders wird vorgeschlagen, dass von dem linken Ast 408 zum rechten Ast 410 gewechselt wird, wenn die Generatorzustandsgröße, hier also die Leistung P, einen oberen Grenzwert erreicht hat. Umgekehrt kann ein Wechseln, besonders bei fallenden Windgeschwindigkeiten, vorgesehen sein, wenn die Anlage mit einem Arbeitspunkt auf dem rechten Ast 410 betrieben wird und eine untere Leistungsgrenze erreicht. Es kann besonders vorgesehen sein, dass dann gewechselt werden muss, wenn also auf dem linken Ast die obere Grenze erreicht wird, oder auf dem rechten Ast die untere Grenze erreicht wird.

Es kann aber vorgesehen sein, dass auch vorher die Möglichkeit besteht zu wechseln. Dafür kann ein aerodynamischer Wirkungsgrad des aktuellen Arbeitspunktes bestimmt werden. Dieser hängt besonders von der Schnelllaufzahl ab, also von dem Quotienten einer Blattspitzengeschwindigkeit geteilt durch die aktuelle Windgeschwindigkeit. Im Teillastbereich ist die Windenergieanlage üblicherweise so ausgelegt, dass die Schnelllaufzahl möglichst ideal ist. Diese Auslegung führt üblicherweise zu der verwendeten Betriebskennlinie, also hier der Betriebskennlinie 402. Liegt der Arbeitspunkt auf dieser Betriebskennlinie 402, ist er aerodynamisch optimal. Es ergibt sich also ein optimaler aerodynamischer Wirkungsgrad.

Wird nun die Drehzahl beispielsweise bei der unteren Vermeidungsdrehzahl n₁ gehalten, wobei die Leistung gemäß dem linken Ast 408 ansteigt, so wird diese Betriebskennlinie 402 verlassen und damit auch der aerodynamisch optimale Betrieb. Der aerodynamische Wirkungsgrad sinkt also. Er kann auch berechnet werden, denn üblicherweise ist ein Kennfeld der Windenergieanlage und damit die Wirkungsgrade verschiedener Betriebspunkte einer Windenergieanlage gut bekannt. Aus der erfassten Drehzahl und der erzeugten Leistung lässt sich der Wirkungsgrad und daraus, über das bekannte Kennfeld, auch die Windgeschwindigkeit ableiten.

Sofern die Windgeschwindigkeit abgeleitet wurde, kann auch berechnet werden, welchen Betriebspunkt die Windenergieanlage nach einem Wechsel zum rechten Ast 410 einnehmen würde. Auch das kann unter Verwendung des bekannten Kennfeldes durchgeführt werden, daraus lässt sich dann der aerodynamische Wirkungsgrad berechnen und damit können die aerodynamischen Wirkungsgrade des aktuellen Betriebspunktes, also gemäß genanntem Beispiel auf dem linken Ast 408, mit dem Wirkungsgrad des Betriebspunktes auf dem rechten Ast 410 verglichen werden, den die Windenergieanlage nach einem Wechsel einnehmen würde. Ist der Wirkungsgrad des Betriebspunktes, der für nach einem Wechsel berechnet wurde, höher als der aktuelle aerodynamische Wirkungsgrad, kommt ein Wechsel in Betracht. Der Wechsel muss aber nicht sofort durchgeführt werden, wenn beispielsweise der Unterschied der beiden Wirkungsgrade gering ist und noch nicht absehbar ist, ob die Windgeschwindigkeit weiter steigen wird, um bei obigem Beispiel zu bleiben.

Bewegt sich ein Betriebspunkt bei fallender Windgeschwindigkeit quasi von oben auf die obere Vermeidungsdrehzahl n₂ zu, kann das Verfahren sinngemäß zum Wechseln vom rechten Ast 410 zum linken Ast 408 angewendet werden.

Ein Wechselvorgang kann so durchgeführt werden, wie er in Figur 5 beschrieben wird. Figur 5 ist eine Veranschaulichung eines Wechsels anhand eines Beispiels, bei dem die Windgeschwindigkeit abfällt und damit die erzeugbare Leistung P abfällt. Diese ist schematisch durch die streng monoton fallende gestrichelte Linie veranschaulicht. Es wird angenommen, dass zum Zeitpunkt t₁ von oben kommend die obere Vermeidungsdrehzahl n₂ erreicht wird. Dann setzt die Drehzahlleistungsregelung ein und versucht die Drehzahl auf der oberen Vermeidungsdrehzahl n₂ zu erhalten. Das führt zum Abnehmen der Leistung, was durch den Leistungsregelzweig 550 angedeutet ist. Der gestrichelte Leistungsverlauf 552 liegt somit über dem Leistungsregelzweig 550. Es wird dadurch weniger Leistung umgesetzt, wodurch der Rotor weniger bzw. nicht mehr abgebremst wird. Die Drehzahl kann gehalten werden.

Zum Startzeitpunkt tz, nämlich zum Starten eines Wechselvorgangs, ist die Leistung so weit abgefallen, dass sie entweder bereits einen unteren Grenzwert erreicht hat oder dass der aerodynamische Wirkungsgrad des Arbeitspunktes inzwischen so schlecht geworden ist, dass ein Wechsel zweckmäßig ist. Im Grunde entspricht der Leistungsregelzweig 550, der allerdings keineswegs wie dargestellt linear verlaufen muss, dem rechten Ast 410 der Fig. 4. In Fig. 4 ist die Leistungsabnahme allerdings über der Drehzahl n dargestellt, sodass der rechte Ast senkrecht verläuft. In Fig. 5 ist der Verlauf des Leistungsregelzweigs 550 aber über die Zeit dargestellt, sodass er nicht senkrecht verläuft.

Wird nun ein Wechsel initiiert, so steigt die Leistung stark an, wie in dem Anstiegszweig 554 des dargestellten Zeitverlaufs zu erkennen ist. Ein weiterer oberer Zweig 556 und ein Abfallzweig 558 bilden zusammen mit dem Anstiegszweig 554 einen Zeitverlauf für die einzustellende Generatorzustandsgröße, hier nämlich die einzustellende Leistung.

Zum Nachwechselzeitpunkt ts ist der Wechsel vollzogen, sodass sich der Arbeitspunkt dann auf dem linken Ast 408 befindet, allerdings am Fuße des linken Astes 408, denn in der Darstellung der Fig. 5 endet der Abfallzweig 558 auf dem gestrichelten Leistungsverlauf 552. Es wird dann also die optimal erzeugbare Leistung abgegeben, sodass sich also der optimale Arbeitspunkt eingestellt hat, der wiederum auf der Betriebskennlinie liegt. Es muss aber nicht beim Wechseln der optimale Arbeitspunkt, der generell synonym auch als Betriebspunkt bezeichnet werden kann, erreicht werden.

Hier kann besonders die Differenzzeit zwischen dem Startzeitpunkt tz und dem Nachwechselzeitpunkt ts als Wechselzeit T_{w} bezeichnet und vorgegeben werden. Der Abstand zwischen der Leistungshöhe des oberen Zweigs 556 und der nach dem Wechsel erreichten Leistung kann als Wechselleistung P_{w} bezeichnet werden. Der Anstiegszweig 554, der obere Zweig 556 und der Abfallzweig 558 bilden etwa ein Trapez und zur Berechnung der Wechselenergie kann vereinfachend das Produkt aus der Wechselzeit T_{w} und der Wechselleistung P_{w} verwendet werden. Um die Schrägen des Anstiegszweigs 554 und des Abfallzweigs 558 zu berücksichtigen, kann als Wechselzeit T_{w} statt der Differenz zwischen dem Startzeitpunkt tz und dem Nachwechselzeitpunkt ts die Zeit abgezogen werden, die eine der beiden Flanken braucht, also beispielsweise die Zeit, die der Abfallzweig 558 benötigt, um von dem oberen Zweig 556 auf den gestrichelten Leistungsverlauf 552 abzufallen.

Sinngemäß kann bei steigender Windgeschwindigkeit von dem linken Ast 408 zum rechten Ast 410 gewechselt werden, indem die Leistung unter den idealen Leistungsverlauf abfällt, um dadurch eine Beschleunigung des Rotors zuzulassen.

In der Fig. 4 ist zudem der Einsatz einer Drehzahlleistungsregelung für den oberen Drehzahlbereich 406 erläutert. Demnach ist vorgesehen, dass ab der Übergangsdrehzahl ns die Drehzahlleistungsregelung verwendet wird, wie sie in Fig. 3 erläutert ist. Besonders kann hier auch die Kopplung zwischen der Drehzahlleistungsregelung 302 und der Pitchregelung 304 mittels der Kopplungsverbindung 306 vorgesehen sein.

Dazu wird vorgeschlagen, dass die Drehzahlleistungsregelung als Drehzahlsollwert eine Drehzahl gemäß einer Übergangsdrehzahlkennlinie erhält. Eine solche Übergangsdrehzahlkennlinie 412 weist einen senkrechten Ast 414 und einen Restast 416 auf, der sich an den senkrechten Ast 414 anschließt. An den Restast 416 schließt sich ein waagerechter Ast 418 an, der Nennleistung P_{N} aufweist und bis Nenndrehzahl n_{N} reicht und darüber hinausreichen kann. Der waagerechte Ast 418 kann auch als Teil der Übergangsdrehzahlkennlinie 412 angesehen werden.

Der senkrechte Ast 414 führt somit dazu, dass bei steigender Windgeschwindigkeit zunächst die Übergangsdrehzahl n₃ die Solldrehzahl für die Drehzahlleistungsregelung bildet. Erreicht dabei mit zunehmender Windgeschwindigkeit die Leistung einen Referenzleistungswert P_{Ref}, der unterhalb der Nennleistung P_{N} liegt, wird der Restast 416 verwendet. Der Restast 416 soll bei steigender Windgeschwindigkeit den Betriebspunkt schließlich bis zur Nennleistung P_{N} führen. Die Nennleistung P_{N} soll dabei vorzugsweise erreicht werden, bevor Nenndrehzahl n_{N} erreicht ist.

Dazu kann der Restast 416 eine positive Steigung aufweisen und, wie in Fig. 4 dargestellt, als gerade ausgebildet sein. Die Leistung steigt gemäß dem Restast 416 dann proportional mit zunehmender Drehzahl an. Es sind aber auch andere Verläufe denkbar, z. B. gemäß einem Polynom zweiter Ordnung, sodass der Restast 416 dann gekrümmt sein kann, um dadurch die Nennleistung P_{N} zu erreichen.

Jedenfalls gibt ein solcher Restast 416 einen Zusammenhang zwischen Drehzahl und Leistung wieder. Dieser Zusammenhang kann so genutzt werden, dass aufgrund der abgegebenen Leistung der Betriebspunkt identifiziert wird und die zugehörige Drehzahl dann als Solldrehzahl in die Drehzahlleistungsregelung eingegeben wird. Dadurch kann die Windenergieanlage mittels der Drehzahlleistungsregelung auch entlang dieses Restastes 416 geführt werden.

Für den senkrechten Ast 414 kann alternativ auch eine negative Steigung vorgesehen sein, sodass mit steigender Leistung die Drehzahl etwas abnimmt. Dies ist durch den alternativen Ast 420 angedeutet, der gestrichelt dargestellt ist. Seine Steigung kann dem Betrage nach bis zu 10 % betragen, demnach die Drehzahl um bis zu 10 % der Nenndrehzahl abnimmt, wenn sich die Leistung um Nennleistung erhöht. Diese dem Betrage nach maximale Steigung von 10 % betrifft also die Änderung der Drehzahl pro Änderung der Leistung, jeweils bezogen auf Nenndrehzahl bzw. Nennleistung. Die Regelung des alternativen Astes 420 kann auch dadurch erfolgen, dass die Leistung erfasst und davon abhängig die gemäß dem alternativen Ast 420 zugeordnete Drehzahl als Solldrehzahl für die Drehzahl-leistungsregelung verwendet wird.

Besonders im Bereich des Restastes 416 kommt in Betracht, dass die Drehzahlleistungsregelung, wie sie in Fig. 3 oben erläutert ist, keine ausreichende Regelreserve mehr aufweist. Entsprechend wird, wieder Bezug nehmend auf Fig. 3, die Kopplungsverbindung 306 einen entsprechend kleinen Wert an die Pitchregelung 304 übertragen, der dort an der fünften Summierstelle 334 berücksichtigt wird. Entsprechend kann dann die Pitchregelung 304 bereits aktiv werden.

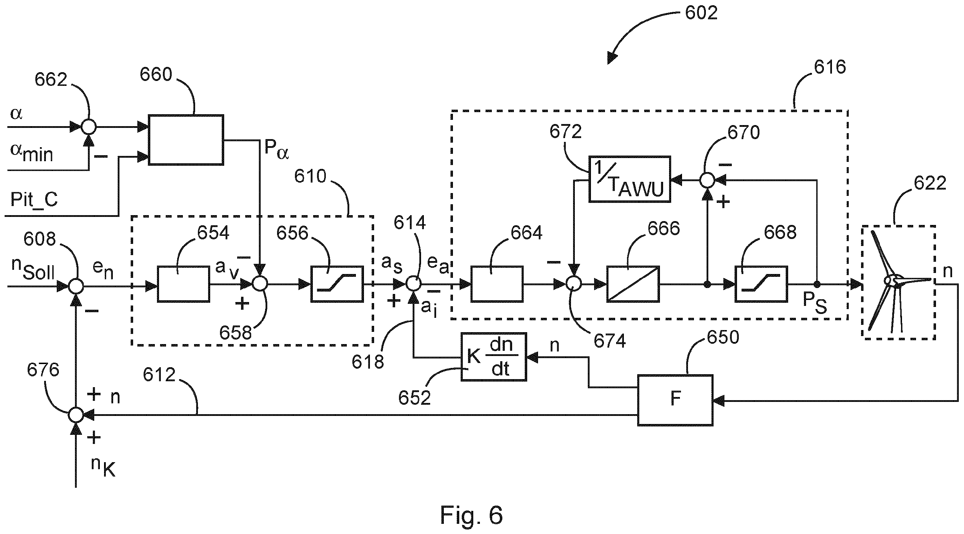

Figur 6 zeigt eine Drehzahlleistungsregelung entsprechend dem oberen Teil der Fig. 3, aber mit weiteren Elementen, teilweise mit mehr Details und teilweise in einer etwas anderen Darstellung. Jedenfalls weist die Drehzahlleistungsregelung 602 der Fig. 6 auch eine erste Summierstelle 608 auf, die im Grunde einen Soll-Istwert-Vergleich für die Drehzahl vornimmt und somit für die Drehzahl einen äußeren Regelfehler eₙ erzeugt. Dieser wird in einen ersten Regler 610 eingegeben, der hier allerdings weitere Details aufweist und daher nur als gestrichelter Block dargestellt ist. Der erste Regler 610 gibt ebenfalls eine Sollbeschleunigung aₛ aus. Dazu erfolgt an der zweiten Summierstelle 614 ein Soll-Istwert-Vergleich und der wird in einen zweiten Regler 616 eingegeben. Der wiederum gibt eine Sollgeneratorzustandsgröße aus, hier nämlich eine Sollleistung Ps. Eine äußere Rückführung 612 sowie eine innere Rückführung 618 sind ebenfalls vorgesehen.

Insoweit entspricht die Funktion auch der zu Fig. 3 zur Drehzahlleistungsregelung 302 erläuterten Funktionsweise. Die aus dem zweiten Regler 616 ausgegebene Sollleistung Ps wird dabei an den Windenergieanlagenblock 622 gegeben, der hier allerdings den Generator beinhaltet. Außerdem gibt der Windenergieanlagenblock 622 eine Drehzahl n aus und diese wird über einen Filterblock 650 gegeben. Der Filterblock 650 gibt somit zwei gefilterte Drehzahlen aus, wobei die Filterungen unterschiedlich ausfallen können. Für die innere Rückführung 618 wird die Drehzahl in dem Beschleunigungsblock 652 unter anderem durch Ableitung in die erfasste Beschleunigung aᵢ umgerechnet. In der äußeren Rückführung 612 ist eine solche Differentiation nicht vorgesehen und daher kann es sinnvoll sein, dass der Filterblock 650 für die innere Rückführung 618 anders gefiltert wird als für die äußere Rückführung 612.

Der erste Regler 610 ist so aufgebaut, dass der Drehzahlregelfehler in dem Drehzahlumrechnungsblock 654 in einen vorläufigen Beschleunigungswert aᵥ umgerechnet wird. Dieser wird über einen Beschleunigungsbegrenzungsblock 656 in den Beschleunigungssollwert aₛ überführt. Bereits der vorläufige Beschleunigungswert aᵥ ist als Leistung vorgesehen. Von ihr kann eine äquivalente Blattwinkelleistung P_{α} abgezogen werden, nämlich in der dritten Summierstelle 658. Die äquivalente Blattwinkelleistung P_{α} wird von dem Blattwinkelleistungsblock 660 bestimmt. In dem Blattwinkelleistungsblock 660 wird die Differenz zwischen einem vorhandenen Blattwinkel α und einem minimalen Blattwinkel αₘᵢₙ unter Zuhilfenahme der vierten Summierstelle 662 berücksichtigt. Außerdem wird eine Information über die aktuelle Pitchregelung Pit_C berücksichtigt.

Besonders kommt es auf diese Differenz zwischen aktuellem und Mindestblattwinkel an. Entspricht der aktuelle Blattwinkel α dem Mindestblattwinkel αₘᵢₙ, ist die Differenz null und es braucht keine Berücksichtigung stattzufinden. Der Ausgangswert des Blattwinkelleistungsblocks 660, also die äquivalente Blattwinkelleistung P_{α}, kann dann null sein. Ist der Blattwinkel aber gegenüber dem Mindestblattwinkel verstellt, so bedeutet das, dass die Leistungsentnahme nicht mehr optimal ist, insbesondere, dass sie reduziert ist, nämlich um diesen äquivalenten Blattwinkelleistungswert P_{α}. Das wird somit an der dritten Summierstelle 658 in dem ersten Regler 610 berücksichtigt. Die vorläufige Beschleunigung aᵥ, die nämlich zur Sollbeschleunigung aₛ führen soll, kann somit verringert werden.

Je stärker diese Aufschaltung gewählt wird, desto schärfer wird die beschriebene Drehzahlregelung mittels der Generatorleistung von der Pitchregelung entkoppelt.

In besonderen Betriebssituationen, in denen eine Überschreitung des Mindestblattwinkels natürlich ist, so etwa während des Anlagenstartvorgangs, wird eine Deaktivierung der beschriebenen Aufschaltung vorgeschlagen.

Entsprechend ist also der vorläufige Beschleunigungswert aᵥ modifiziert und das Ergebnis wird zusätzlich über den Beschleunigungsbegrenzungsblock 656 gegeben, sodass sich der Beschleunigungssollwert aₛ ergibt.

Der Soll-Istwert-Vergleich der Beschleunigungswerte führt dann zu dem inneren Regelfehler eₐ, der in dem zweiten Regler 616 in den Beschleunigungsumrechnungsblock 664 eingegeben wird. In dem Beschleunigungsumrechnungsblock 664 wird besonders eine Zeitkonstante berücksichtigt, die als Nachstellzeit bezeichnet werden kann. Das Ergebnis wird dann auf den Integrator 666 gegeben. Der Ausgang des Integrators 666 ist im Grunde die zu bestimmende Sollleistung Pₛ, wobei diese zunächst noch über einen Leistungsbegrenzungsblock 668 gegeben wird, um Begrenzungen zu berücksichtigen.

Um zu vermeiden, dass der Integrator 666 weiter aufintegriert, obwohl in dem Leistungsbegrenzungsblock 668 bereits eine Begrenzung erreicht wurde, erfolgt ein Vergleich zwischen der unbegrenzten und der begrenzten Leistung in der fünften Summierstelle 670. Wenn die Begrenzung im Leistungsbegrenzungsblock 668 nicht anschlägt, hat das Ergebnis der Differenzbildung in der fünften Summierstelle 670 den Wert null. Schlägt die Begrenzung aber an, wird die Differenz über den Integratorbegrenzungsblock 672 zum Eingang des Integrators 666 zurückgeführt, indem es an der sechsten Summierstelle 674 von dem Ergebnis des Beschleunigungsumrechnungsblocks 664 abgezogen wird.

Weiterhin ist in der Drehzahlleistungsregelung 602 der Fig. 6 eine Kennlinienverschiebung vorgesehen. Die Drehzahlleistungskennlinie kann dabei für die Berücksichtigung in der Drehzahlleistungsregelung um den Drehzahlverschiebungswert nα verschoben werden. Dafür wird der Drehzahlverschiebungswert nα an der siebten Summierstelle 676 auf den Drehzahlistwert aufaddiert. Der Drehzahlverschiebungswert nα kann beispielsweise 0,3 bis 1,5 U/min betragen. Dieser Wert wird auf die gemessene oder erfasste Drehzahl n aufaddiert und das führt dazu, dass aus Sicht des Drehzahlleistungsreglers die Istdrehzahl etwas größer ist, als sie tatsächlich ist. Das führt zu dem Effekt, dass die Betriebskennlinie, also die Drehzahlleistungskennlinie, um den entsprechenden Wert der Verschiebungsdrehzahl nₖ nach links verschoben wird.

Die Aktivierung der Verschiebung und auch ihre Größe kann dabei von einem eingestellten Blattwinkel abhängen, und damit von einem Verhalten einer Pitchregelung, wie z.B. der Pitchregelung 304 der Figur 3. Gemäß der Pitchregelung kann der Sollwert für die Blattwinkel αₛ als Kriterium der Verschiebung verwendet werden. Dadurch kann erreicht werden, dass bei Böigkeit ein Drehzahlabfall nicht zu einer Reduzierung der Leistung führt, wenn dieser Drehzahlabfall um weniger als die Verschiebungsdrehzahl unterhalb der Nenndrehzahl liegt.

Die Erfindung dient somit der Drehzahlregelung der WEA im Teillastbereich, d.h. solange die Drehzahl maßgeblich durch die Anlagenleistung bzw. das Generatormoment gesteuert wird, und noch nicht primär durch die Blattwinkel.

Es kann besonders eine Verbesserung der Leistungskurve einer Windenergieanlage und eine Umfahrung von Drehzahlen erreicht werden, vor allem zur Vermeidung des Betriebs in Resonanzstellen. Damit ist eine Vermeidung von Lasten und Tonhaltigkeit erreichbar, um nur zwei Beispiele zu nennen.

Es wird insbesondere Folgendes vorgeschlagen:
Eine kaskadierte Regelungsstruktur wird vorgeschlagen, mit einer äußeren Schleife für eine Drehzahlregelung, und einer inneren Schleife für eine Beschleunigungsregelung. Damit ist eine vorteilhafte Kopplung an einen Volllastregler ermöglicht, nämlich insbesondere an die Pitchregelung.

Eine Übergangskennlinie wird vorgeschlagen, über die das vorgeschlagene Regelungskonzept, insbesondere die Drehzahlleistungsregelung kompatibel zur Pitchregelung gemacht werden kann.

Übergangsfunktionen bzw. -konzepte, die auch als Transitionsfunktionen bezeichnet werden können, zum gesteuerten Durchfahren von Drehzahlvermeidungsgebieten von Resonanzstellen, sowie die Wahl der Schaltzeitpunkte zum Durchfahren der Drehzahlvermeidungsgebiete, werden vorgeschlagen.

Für Abschnitte im Teillastbereich, in denen eine Drehzahlleistungsregelung vorgeschlagen wird, besonderes im oberen Drehzahlbereich, wird wenigstens ein Abschnitt mit einer nicht senkrechten, Drehzahlkennlinie vorgeschlagen, insbesondere als lineare Abschnitt mit einer konstanten Steigung. Damit gibt der Abschnitt leistungsabhängige Drehzahlsollwerte vor.

## Patentansprüche

1. Verfahren zum Steuern einer Windenergieanlage (100), wobei die Windenergieanlage (100) einen aerodynamischen Rotor (106) aufweist, der mit variabler Drehzahl betrieben wird, und der in ihrem Blattwinkel verstellbare Rotorblätter (108) ausweist, wobei
- die Windenergieanlage (100) in einem Teillastbereich durch eine Betriebskennliniensteuerung gesteuert wird, die eine Betriebskennlinie verwendet, wobei
- die Betriebskennlinie (402) einen Zusammenhang zwischen der Drehzahl und einer einzustellenden Generatorzustandsgröße vorgibt, wobei die einzustellende Generatorzustandsgröße eine Generatorleistung oder ein Generatormoment ist, und
- die Betriebskennliniensteuerung so erfolgt, dass in Abhängigkeit von einer erfassten Drehzahl ein durch die Betriebskennlinie vorgegebener Wert der Generatorzustandsgröße eingestellt wird, und
- die Windenergieanlage in einem Volllastbereich, durch eine Pitchregelung (304) geregelt wird, bei der die Drehzahl durch Verstellen der Blattwinkel auf einen Drehzahlsollwert geregelt wird, wobei
- in wenigstens einem vorgebbaren Drehzahlbereich des Teillastbereichs, und/oder in einem Übergangsbereich vom Teillastbereich zum Volllastbereich die Windenergieanlage durch eine Drehzahlleistungsregelung (302) geregelt wird, bei der die Drehzahl durch Verstellen der Generatorzustandsgröße auf einen Drehzahlsollwert geregelt wird, **dadurch gekennzeichnet dass**
- die Drehzahlleistungsregelung so erfolgt, dass
- in einer äußeren Kaskade aus einem Vergleich einer vorgegebenen Solldrehzahl mit einer erfassten Istdrehzahl über einen ersten Regler (310) ein erster Beschleunigungssollwert (aₛ) des Rotors bestimmt wird,
- in einer inneren Kaskade aus einem Vergleich des ersten Beschleunigungssollwertes mit einem erfassten Beschleunigungsistwert des Rotors über einen zweiten Regler (316) ein Generatorsollwert als Sollwert für die Generatorzustandsgröße bestimmt wird.

2. Verfahren nach Anspruch 1, **dadurch gekennzeichnet, dass**
- die Drehzahlleistungsregelung (302) einen Integralanteil aufweist, insbesondere, dass
- der zweite Regler den Integralanteil aufweist.

3. Verfahren nach Anspruch 1 oder 2, **dadurch gekennzeichnet, dass**
- in der Drehzahlleistungsregelung
- der erste Beschleunigungssollwert und der Beschleunigungsistwert jeweils als eine Beschleunigungsleistung ausgebildet sind, wobei
- die Beschleunigungsleistung einer Rotorbeschleunigung zugeordnet ist und eine Leistung beschreibt, die erforderlich ist, die Rotorbeschleunigung hervorzurufen.

4. Verfahren nach einem der vorstehenden Ansprüche, **dadurch gekennzeichnet, dass**
- in der Drehzahlleistungsregelung
- die äußere Kaskade, insbesondere der erste Regler, zum Bestimmen des ersten Beschleunigungssollwertes wenigstens einen Beschleunigungsgrenzwert aufweist und vorzugsweise
- der wenigstens eine Beschleunigungsgrenzwert einstellbar ist und/oder
- als der wenigstens eine Beschleunigungsgrenzwert ein oberer und ein unterer Beschleunigungsgrenzwert mit unterschiedlichen Werten vorgesehen sind,
und/oder
- die innere Kaskade, insbesondere der zweite Regler, zum Bestimmen einer bzw. der Stellgröße zum Einstellen der Generatorzustandsgröße
- ein Integralglied mit einer Integratorbegrenzung aufweist, und optional
- die Integratorbegrenzung einstellbar ist und/oder
- unterschiedliche obere und untere Grenzwerte aufweist.

5. Verfahren nach einem der vorstehenden Ansprüche, **dadurch gekennzeichnet, dass**
- der wenigstens eine vorgebbare Drehzahlbereich jeweils als ein Drehzahlvermeidungsbereich vorgesehen ist, der durch eine untere Vermeidungsdrehzahl und eine obere Vermeidungsdrehzahl gekennzeichnet ist, und
- die Drehzahlleistungsregelung verwendet wird, wenn bei steigender Drehzahl die untere Vermeidungsdrehzahl, oder bei fallender Drehzahl die obere Vermeidungsdrehzahl erreicht wird, wobei
bei Verwendung der Drehzahlleistungsregelung die Windenergieanlage in Abhängigkeit von einer vorherrschenden Windgeschwindigkeit
- in einem unteren Drehzahlbereich, der die untere Vermeidungsdrehzahl umfasst, in einem unteren Arbeitspunkt betreibbar ist, und
- in einem oberen Drehzahlbereich, der die obere Vermeidungsdrehzahl umfasst, in einem oberen Arbeitspunkt betreibbar ist, und
- ein Wechseln zwischen dem unteren und oberen Arbeitspunkt in Abhängigkeit von einer aerodynamischen Bewertung des unteren und oberen Arbeitspunktes durchgeführt wird.

6. Verfahren nach einem der vorstehenden Ansprüche, **dadurch gekennzeichnet, dass**,
- zum Wechseln zwischen einem bzw. dem unteren und oberen Arbeitspunkt eine wenigstens zweistufige Prüfung vorgenommen wird, wobei
- in einer ersten Stufe geprüft wird, ob der Arbeitspunkt, zu dem gewechselt werden soll, einen höheren aerodynamischen Wirkungsgrad hat, als der Arbeitspunkt, von dem gewechselt werden soll, und
- in einer zweiten Stufe geprüft wird, ob die Generatorzustandsgröße, die mit der Teillastdrehzahlregelung bestimmt wird, eine obere oder untere Generatorzustandsgrenze erreicht, wobei insbesondere
- abhängig von der Prüfung in der ersten Stufe ein Wechsel zugelassen wird, und abhängig von der Prüfung in der zweiten Stufe ein Wechsel vorgeschrieben wird.

7. Verfahren nach einem der vorstehenden Ansprüche, **dadurch gekennzeichnet, dass**,
- ein Wechseln zwischen einem bzw. dem unteren und oberen Arbeitspunkt durchgeführt wird, wenn
- der Arbeitspunkt, zu dem gewechselt werden soll,
- für einen vorbestimmbaren Prüfzeitraum,
- einen höheren aerodynamischen Wirkungsgrad hat, als der Arbeitspunkt, von dem gewechselt werden soll, wobei vorzugsweise
- der vorbestimmbare Prüfzeitraum in einem Bereich von 5 Sekunden bis 10 Minuten liegt, insbesondere im Bereich von 10 Sekunden bis 5 Minuten.

8. Verfahren nach einem der vorstehenden Ansprüche, **dadurch gekennzeichnet, dass**
- für die Drehzahlleistungsregelung der Drehzahlsollwert
- als Konstante vorgegeben wird, oder
- über wenigstens eine Drehzahlkennlinie vorgegeben wird, wobei die Drehzahlkennlinie jeweils Drehzahlwerte in Abhängigkeit von der einzustellenden Generatorzustandsgröße aufweist, und insbesondere
- die Drehzahlkennlinie so ausgebildet ist, dass sie, zumindest abschnittsweise, eine negative Steigung aufweist, so dass mit zunehmenden Werten der Generatorzustandsgröße die Drehzahlwerte abnehmen.

9. Verfahren nach einem der vorstehenden Ansprüche, **dadurch gekennzeichnet, dass**,
- zum Wechseln zwischen einem bzw. dem unteren und oberen Arbeitspunkt
- eine Wechselzeit vorgegeben wird, die vorzugsweise kleiner als 20 Sekunden, insbesondere kleiner als 10 Sekunden ist, und/oder
- ein Zeitverlauf für die einzustellende Generatorzustandsgröße vorgegeben wird, um dadurch den Wechsel zu steuern.

10. Verfahren nach einem der vorstehenden Ansprüche, **dadurch gekennzeichnet, dass**
- der Übergangsbereich im Teillastbereich in einem oberen Drehzahlbereich liegt, der durch Drehzahlen ab einer Übergangsdrehzahl gekennzeichnet ist, wobei der obere Drehzahlbereich insbesondere oberhalb eines bzw. des Drehzahlvermeidungsbereichs liegt, wobei
- die Windenergieanlage durch eine Nenndrehzahl gekennzeichnet ist, und die Übergangsdrehzahl wenigstens 80%, insbesondere wenigstens 85% der Nenndrehzahl und/oder einer Solldrehzahl der Pitchregelung beträgt.

11. Verfahren nach einem der vorstehenden Ansprüche, **dadurch gekennzeichnet, dass**
- für die Drehzahlleistungsregelung der Drehzahlsollwert über eine Übergangsdrehzahlkennlinie vorgegeben wird, die die bzw. eine Drehzahlkennlinie bildet, wobei
- für eine Drehzahl mit einem Drehzahlwert entsprechend der Übergangsdrehzahl die Übergangsdrehzahlkennlinie senkrecht verläuft, so dass mit steigender Generatorzustandsgröße die Drehzahl konstant ist, bis die Generatorzustandsgröße einen vorbestimmten ersten Generatorreferenzwert erreicht, der unterhalb eines Nennwertes der Generatorzustandsgröße liegt, und/oder
- die Übergangsdrehzahlkennlinie ab der Übergangsdrehzahl und/oder ab dem ersten Generatorreferenzwert, eine positive Steigung aufweist, so dass die Werte der Generatorzustandsgröße mit zunehmender Drehzahl zunehmen, bis ein Nennwert der Generatorzustandsgröße erreicht ist.

12. Verfahren nach einem der vorstehenden Ansprüche, **dadurch gekennzeichnet, dass**
- eine Regelreserve in Abhängigkeit von einer Differenz zwischen eingestellter Generatorzustandsgröße und einer bzw. der oberen Generatorzustandsgrenze bestimmt wird, oder die Differenz die Regelreserve ist,
- die Regelreserve von der Drehzahlleistungsregelung an die Pitchregelung, übertragen wird, und
- die Drehzahlleistungsregelung und die Pitchregelung zumindest teilweise parallel arbeiten und über die Regelreserve aufeinander abgestimmt werden, und/oder
- eine Umschaltung oder ein Übergang zwischen der Drehzahlleistungsregelung und der Pitchregelung in Abhängigkeit von der Regelreserve erfolgt.

13. Verfahren nach einem der vorstehenden Ansprüche, **dadurch gekennzeichnet, dass**
- die Drehzahlleistungsregelung gegenüber der Pitchregelung priorisiert wird, insbesondere so, dass die Pitchregelung ganz oder teilweise unterdrückt wird, solange die Drehzahlleistungsregelung eine Stellgrößenbeschränkung nicht erreicht, und/oder
- die Pitchregelung die Drehzahl zusätzlich in Abhängigkeit von einem Beschleunigungsistwert des Rotors steuert, und eine Regelung der Drehzahl durch die Pitchregelung umso mehr unterdrückt wird, je weiter bei der Drehzahlleistungsregelung der Generatorsollwert unterhalb einer Generatorsollwertgrenze liegt.

14. Verfahren nach einem der vorstehenden Ansprüche, **dadurch gekennzeichnet, dass**
- die Drehzahlleistungsregelung zum Regeln der Drehzahl die Generatorzustandsgröße als Stellgröße verwendet, die als Generatorstellgröße bezeichnet wird, und
- die Pitchregelung zum Regeln der Drehzahl den Blattwinkel als Stellgröße verwendet, die als Pitchstellgröße bezeichnet wird, wobei die Blattwinkel insbesondere mit zunehmender Windgeschwindigkeit jeweils von einem Teillastblattwinkel, der in dem Teillastbereich eingestellt ist, zu einem Endwinkel hin vergrößert werden, wobei
- die Drehzahlleistungsregelung mit der Pitchregelung koordiniert wird, und insbesondere
- zum Koordinieren der Drehzahlleistungsregelung mit der Pitchregelung die Generatorstellgröße und die Pitchstellgröße miteinander koordiniert werden.

15. Verfahren nach Anspruch 14, **dadurch gekennzeichnet, dass**
- eine bzw. die Stellgrößenbeschränkung der Generatorstellgröße berücksichtigt wird, und
- die Drehzahlleistungsregelung und die Pitchregelung so koordiniert werden, dass die Drehzahlleistungsregelung, solange sie die Stellgrößenbeschränkung nicht erreicht, einen größeren Einfluss auf die Drehzahl ausübt als, die Pitchregelung, und/oder
- die Pitchstellgröße in Abhängigkeit von der Stellgrößenbeschränkung der Generatorstellgröße eingestellt wird, wobei insbesondere
- eine Differenz zwischen der Generatorstellgröße und der Stellgrößenbeschränkung einen Stellbereich der Drehzahlleistungsregelung definiert, und
- die Pitchstellgröße so verändert wird, dass die Pitchregelung einen umso geringeren Einfluss auf die Drehzahl hat, je größer der Stellbereich der Drehzahlleistungsregelung ist.

16. Verfahren nach einem der vorstehenden Ansprüche, **dadurch gekennzeichnet, dass**
- die Pitchregelung so erfolgt, dass
- in einer äußeren Kaskade aus einem Vergleich einer vorgegebenen Solldrehzahl mit einer erfassten Istdrehzahl über einen dritten Regler ein zweiter Beschleunigungssollwert bestimmt wird,
- in einer inneren Kaskade aus einem Vergleich des zweiten Beschleunigungssollwertes mit erfasstem Beschleunigungsistwert über einen vierten Regler eine Stellgröße, insbesondere eine bzw. die Pitchstellgröße, zum Verstellen des Blattwinkels bestimmt wird, und
- der Vergleich des zweiten Beschleunigungssollwertes mit dem erfassten Beschleunigungsistwert einen Regelfehler bildet und der Regelfehler mittels einer bzw. der Regelreserve modifiziert wird, und der so modifizierte Regelfehler eine Eingangsgröße des vierten Reglers bildet, wobei vorzugsweise
- der Beschleunigungssollwert, der Beschleunigungsistwert und der resultierende Regelfehler jeweils als Leistungswerte ausgebildet sind, und/oder
- die Modifizierung insbesondere so erfolgt, dass das Verstellen des Blattwinkels verringert wird, im Vergleich dazu, wenn der Regelfehler nicht modifiziert wird, oder dass das Verstellen des Blattwinkels unterdrückt wird, und/oder wobei
- die Modifizierung insbesondere so erfolgt, dass die Regelreserve oder eine dazu äquivalente, insbesondere proportionale Größe, wirksam auf den Vergleich des zweiten Beschleunigungssollwertes mit dem erfassten Beschleunigungsistwert aufgeschaltet wird.

17. Verfahren nach einem der vorstehenden Ansprüche, **dadurch gekennzeichnet, dass**
- in der Drehzahlleistungsregelung der erste Beschleunigungssollwert, der in Abhängigkeit von einem Vergleich einer vorgegebenen Solldrehzahl mit einer erfassten Istdrehzahl bestimmt wird, zusätzlich in Abhängigkeit von einem Blattwinkel verändert wird, insbesondere, dass
- der erste Beschleunigungssollwert um einen Aufschaltwert vergrößert wird, wobei der Aufschaltwert in Abhängigkeit von einem Differenzwinkel als Differenz zwischen aktuellem Blattwinkel und einem bzw. dem Teillastblattwinkel, bestimmt wird, insbesondere proportional dazu bestimmt wird.

18. Verfahren nach einem der vorstehenden Ansprüche, **dadurch gekennzeichnet, dass**
- eine Kennlinienverschiebung durchgeführt wird, bei der in Abhängigkeit von einem Betriebspunkt, insbesondere in Abhängigkeit von einem Verhalten einer Pitchregelung, insbesondere in Abhängigkeit von einem eingestellten Blattwinkel die Betriebskennlinie so verschoben wird, dass bei gleicher Drehzahl ein höherer Wert der Generatorzustandsgröße eingestellt wird, insbesondere so, dass
- die Betriebskennlinie um eine vorbestimmte oder einstellbare Verschiebungsdrehzahl verschoben wird, die insbesondere in einem Bereich von 0,3 bis 1,5 U/min, vorzugsweise in einem Bereich von 0,5 bis 1 U/min liegt.

19. Verfahren nach Anspruch 18, **dadurch gekennzeichnet, dass**
- die Kennlinienverschiebung
- in Abhängigkeit von einer Überschreitung des Teillastblattwinkels durchgeführt wird, insbesondere
- in Abhängigkeit von einem Überschreitungswert, um den der Blattwinkel den Teillastwinkel überschreitet.

20. Windenergieanlage (100) mit
- einem aerodynamischen Rotor (106), der mit variabler Drehzahl betrieben wird, und der in ihrem Blattwinkel verstellbare Rotorblätter (108) ausweist, und
- einer Steuereinrichtung zum Steuern der Windenergieanlage (100), wobei
- die Steuereinrichtung dazu vorbereitet ist, die Windenergieanlage mittels eines Verfahrens gemäß einem der vorstehenden Ansprüche zu steuern.

21. Windpark (112) mit mehreren Windenergieanlagen (100), wobei eine, mehrere oder alle der Windenergieanlage als Windenergieanlage gemäß Anspruch 20 ausgebildet ist bzw. sind.

## Claims

1. A method for controlling a wind power installation (100), the wind power installation (100) having an aerodynamic rotor (106) which is operated with variable speed and which has rotor blades (108) that are adjustable in their blade angle, wherein
- the wind power installation (100) is controlled in a partial-load range by an open-loop operating-characteristic control, which uses an operating characteristic, wherein
- the operating characteristic (402) presets a relationship between the rotational speed and a generator state variable to be set, the generator state variable to be set being a generator power or a generator torque, and
- the operating-characteristic control takes place such that a value of the generator state variable preset by the operating characteristic is set in dependence on a detected speed, and
- the wind power installation is controlled in a full-load range by a closed-loop pitch control (304), in which the rotational speed is controlled to a speed setpoint value by adjusting the blade angles, wherein
- in at least one presettable speed range of the partial-load range and/or in a transitional range from the partial-load range to the full-load range, the wind power installation is controlled by a speed-power control (302), in which the rotational speed is controlled to a speed setpoint value by adjusting the generator state variable, **characterized in that**
- the speed-power control takes place such that
- in an outer cascade, a first acceleration setpoint value (aₛ) of the rotor is determined from a comparison of a preset setpoint speed with a detected actual speed by way of a first closed-loop controller (310),
- in an inner cascade, a generator setpoint value is determined as a setpoint value for the generator state variable from a comparison of the first acceleration setpoint value with a detected acceleration actual value of the rotor by way of a second closed-loop controller (316).

2. The method as claimed in claim 1, **characterized in that**
- the speed-power control (302) has an integral component, in particular that
- the second controller has the integral component.

3. The method as claimed in claim 1 or 2, **characterized in that**
- in the speed-power control
- the first acceleration setpoint value and the acceleration actual value are respectively formed as an acceleration power, wherein
- the acceleration power is assigned to a rotor acceleration and describes a power that is required to bring about the rotor acceleration.

4. The method as claimed in one of the preceding claims, **characterized in that**
- in the speed-power control
- the outer cascade, in particular the first controller, has for determining the first acceleration setpoint value at least one acceleration limit value and preferably
- the at least one acceleration limit value is settable and/or
- an upper acceleration limit value and a lower acceleration limit value with different values are provided as the at least one acceleration limit value,
and/or
- the inner cascade, in particular the second controller, has for determining a or the manipulated variable for setting the generator state variable
- an integral element with an integrator limitation and optionally
- the integrator limitation is settable and/or
- has different upper and lower limit values.

5. The method as claimed in one of the preceding claims, **characterized in that**
- the at least one presettable speed range is respectively provided as a speed avoidance range, which is **characterized by** a lower avoidance speed and an upper avoidance speed, and
- the speed-power control is used if the lower avoidance speed is reached when there is increasing rotational speed or the upper avoidance speed is reached when there is decreasing rotational speed, wherein
when using the speed-power control, the wind power installation can, in dependence on a prevailing wind speed
- be operated in a lower speed range, which includes the lower avoidance speed, at a lower operating point, and
- be operated in an upper speed range, which includes the upper avoidance speed, at an upper operating point, and
- changing between the lower operating point and the upper operating point is carried out in dependence on an aerodynamic evaluation of the lower operating point and upper operating point.

6. The method as claimed in one of the preceding claims, **characterized in that**,
- for changing between a or the lower operating point and an or the upper operating point, an at least two-stage check is performed, wherein
- in a first stage, it is checked whether the operating point to which it is intended to change has a higher aerodynamic efficiency than the operating point from which it is intended to change, and
- in a second stage, it is checked whether the generator state variable that is determined by the closed-loop partial-load speed control reaches an upper or lower generator state limit, wherein in particular
- dependent on the check in the first stage, a change is allowed, and, dependent on the check in the second stage, a change is prescribed.

7. The method as claimed in one of the preceding claims, **characterized in that**
- a change between a or the lower operating point and an or the upper operating point is carried out if
- the operating point to which it is intended to change has
- for a predeterminable checking time period
- a higher aerodynamic efficiency than the operating point from which it is intended to change, wherein preferably
- the predeterminable checking time period lies in a range from 5 seconds to 10 minutes, in particular in the range from 10 seconds to 5 minutes.

8. The method as claimed in one of the preceding claims, **characterized in that**
- for the speed-power control, the speed setpoint value
- is preset as a constant or
- is preset by way of at least one speed characteristic, the speed characteristic having in each case speed values in dependence on the generator state variable to be set, and in particular
- the speed characteristic is formed such that it at least partly has a negative slope, so that, with increasing values of the generator state variable, the speed values decrease.

9. The method as claimed in one of the preceding claims, **characterized in that**,
- for changing between a or the lower operating point and an or the upper operating point,
- a change time is preset, preferably less than 20 seconds, in particular less than 10 seconds, and/or
- a progression over time is preset for the generator state variable to be set, in order in this way to control the change.

10. The method as claimed in one of the preceding claims, **characterized in that**
- the transitional range in the partial-load range lies in an upper speed range that is **characterized by** rotational speeds from a transitional speed, the upper speed range lying in particular above a or the speed avoidance range, wherein
- the wind power installation is **characterized by** a rated speed and the transitional speed is at least 80%, in particular at least 85%, of the rated speed and/or of a setpoint speed of the pitch control.

11. The method as claimed in one of the preceding claims, **characterized in that**
- for the speed-power control, the speed setpoint value is preset by way of a transitional speed characteristic, which forms the or a speed characteristic, wherein
- the transitional speed characteristic runs vertically for a rotational speed with a speed value in correspondence with the transitional speed, so that with an increasing generator state variable the rotational speed is constant until the generator state variable reaches a predetermined first generator reference value, which lies below a rated value of the generator state variable, and/or
- from the transitional speed and/or from the first generator reference value, the transitional speed characteristic has a positive slope, so that the values of the generator state variable increase with increasing rotational speed until a rated value of the generator state variable has been reached.

12. The method as claimed in one of the preceding claims, **characterized in that**
- a control reserve is determined in dependence on a difference between the set generator state variable and an or the upper generator state limit, or the difference is the control reserve,
- the control reserve is transferred from the speed-power control to the pitch control, and
- the speed-power control and the pitch control operate at least partially in parallel and are coordinated with one another by way of the control reserve, and/or
- a switchover or a transfer between the speed-power control and the pitch control takes place in dependence on the control reserve.

13. The method as claimed in one of the preceding claims, **characterized in that**
- the speed-power control is prioritized over the pitch control, in particular such that the pitch control is entirely or partially suppressed as long as the speed-power control does not reach a manipulated-variable restriction, and/or
- the pitch control additionally controls the rotational speed in dependence on an acceleration actual value of the rotor, and control of the rotational speed by the pitch control is suppressed all the more the further the generator setpoint value lies below a generator setpoint value in the speed-power control.

14. The method as claimed in one of the preceding claims, **characterized in that**
- the speed-power control uses the generator state variable as a manipulated variable for controlling the rotational speed, and this is consequently referred to as the generator manipulated variable, and
- the pitch control uses the blade angle as a manipulated variable for controlling the rotational speed, and this is consequently referred to as the pitch manipulated variable, the blade angles being increased, in particular with increasing wind speed, in each case from a partial-load blade angle, which is set in the partial-load range, toward an end angle, wherein
- the speed-power control is coordinated with the pitch control, and in particular
- the generator manipulated variable and the pitch manipulated variable are coordinated with one another for coordinating the speed-power control with the pitch control.

15. The method as claimed in claim 14, **characterized in that**
- a or the manipulated-variable restriction of the generator manipulated variable is taken into account, and
- the speed-power control and the pitch control are coordinated such that, as long as it does not reach the manipulated-variable restriction, the speed-power control has a greater influence on the rotational speed than the pitch control, and/or
- the pitch manipulated variable is set in dependence on the manipulated-variable restriction of the generator manipulated variable, wherein in particular
- a difference between the generator manipulated variable and the manipulated-variable restriction defines an adjustment range of the speed-power control, and
- the pitch manipulated variable is changed such that the pitch control has all the smaller influence on the rotational speed the greater the adjustment range of the speed-power control.

16. The method as claimed in one of the preceding claims, **characterized in that**
- the pitch control takes place such that
- in an outer cascade, a second acceleration setpoint value is determined from a comparison of a preset setpoint speed with a detected actual speed by way of a third closed-loop controller,
- in an inner cascade, a manipulated variable, in particular a or the pitch manipulated variable, for adjusting the blade angle is determined from a comparison of the second acceleration setpoint value with a detected acceleration actual value by way of a fourth closed-loop controller, and
- the comparison of the second acceleration setpoint value with the detected acceleration actual value forms a control error and the control error is modified by means of a or the control reserve, and the thus-modified control error forms an input variable of the fourth controller, wherein preferably
- the acceleration setpoint value, the acceleration actual value and the resulting control error are respectively formed as power values, and/or
- the modification takes place in particular such that the adjusting of the blade angle is reduced in comparison with if the control error is not modified, or that the adjusting of the blade angle is suppressed, and/or wherein
- the modification takes place in particular such that the control reserve or a variable equivalent to it, in particular proportional to it, is effectively fed forward to the comparison of the second acceleration setpoint value with the detected acceleration actual value.

17. The method as claimed in one of the preceding claims, **characterized in that**
- in the speed-power control, the first acceleration setpoint value, which is determined in dependence on a comparison of a preset setpoint speed with a detected actual speed, is additionally changed in dependence on a blade angle, in particular that
- the first acceleration setpoint value is increased by a feedforwarding value, the feedforwarding value being determined in dependence on a differential angle as the difference between the blade angle at the time and the partial-load blade angle, in particular is determined proportionally thereto.

18. The method as claimed in one of the preceding claims, **characterized in that**
- a displacement of the characteristic curve is carried out, in which the operating characteristic is displaced in dependence on an operating point, in particular in dependence on a behavior of a pitch control, in particular in dependence on a set blade angle, such that, with the same rotational speed, a higher value of the generator state variable is set, in particular such that
- the operating characteristic is displaced by a predetermined or settable displacement speed, which lies in particular in a range from 0.3 to 1.5 rpm, preferably in a range from 0.5 to 1 rpm.

19. The method as claimed in claim 18, **characterized in that**
- the displacement of the characteristic curve
- is carried out in dependence on an exceedance of the partial-load blade angle, in particular
- in dependence on an exceedance value by which the blade angle exceeds the partial-load angle.

20. A wind power installation (100) with
- an aerodynamic rotor (106) which is operated with variable speed and which has rotor blades (108) that are adjustable in their blade angle, and
- an open-loop control device for controlling the wind power installation (100), wherein
- the open-loop control device is prepared to control the wind power installation by means of a method according to one of the preceding claims.

21. A wind farm (112) with a number of wind power installations (100), wherein one or more or all of the wind power installations is or are formed as a wind power installation according to claim 20.

## Revendications

1. Procédé de commande d'une éolienne (100), dans lequel l'éolienne (100) présente un rotor aérodynamique (106), qui fonctionne à une vitesse de rotation variable et qui présente des pales de rotor (108) dont l'angle de pale peut être ajusté, dans lequel
- l'éolienne (100) est commandée dans une plage de charge partielle par une commande de caractéristique de fonctionnement, qui utilise une caractéristique de fonctionnement, dans lequel
-- la caractéristique de fonctionnement (402) spécifie une relation entre la vitesse de rotation et une grandeur d'état de générateur à régler, dans lequel la grandeur d'état de générateur à régler est une puissance de générateur ou un couple de générateur, et
-- la commande de la caractéristique de fonctionnement est effectuée de telle sorte qu'une valeur de la grandeur d'état de générateur spécifiée par la caractéristique de fonctionnement est réglée en fonction d'une vitesse de rotation détectée, et
- l'éolienne est régulée dans une plage de pleine charge par une commande de pas (304), dans laquelle la vitesse de rotation est régulée en ajustant l'angle de pale sur une valeur de consigne de vitesse de rotation, dans lequel
- dans au moins une plage de vitesses de rotation spécifiée de la plage de charge partielle et/ou dans une plage de transition de la plage de charge partielle à la plage de pleine charge, l'éolienne est régulée par une régulation de puissance de vitesse de rotation (302), dans laquelle la vitesse de rotation est régulée en ajustant la grandeur d'état de générateur sur une valeur de consigne de vitesse de rotation, **caractérisé en ce que**
- la régulation de puissance de vitesse de rotation est effectuée de telle sorte que
-- dans une cascade externe, une première valeur de consigne d'accélération (aₛ) du rotor est déterminée à partir d'une comparaison d'une vitesse de rotation de consigne spécifiée à une vitesse de rotation réelle détectée par l'intermédiaire d'un premier régulateur (310),
-- dans une cascade interne, une valeur de consigne de générateur est déterminée comme valeur de consigne pour la grandeur d'état de générateur à partir d'une comparaison de la première valeur de consigne d'accélération à une valeur d'accélération réelle détectée du rotor par l'intermédiaire d'un deuxième régulateur (316).

2. Procédé selon la revendication 1, **caractérisé en ce que**
- la régulation de puissance de vitesse de rotation (302) présente une composante intégrale, en particulier que
- le deuxième régulateur présente la composante intégrale.

3. Procédé selon la revendication 1 ou 2, **caractérisé en ce que**
- dans la régulation de puissance de vitesse de rotation
- la première valeur de consigne d'accélération et la valeur réelle d'accélération sont chacune réalisées comme une puissance d'accélération, dans lequel
- la puissance d'accélération est attribuée à une accélération de rotor et décrit une puissance qui est nécessaire pour provoquer l'accélération de rotor.

4. Procédé selon l'une quelconque des revendications précédentes, **caractérisé en ce que**
- dans la régulation de puissance de vitesse de rotation
- la cascade externe, en particulier le premier régulateur, présente au moins une valeur limite d'accélération pour déterminer la première valeur de consigne d'accélération et de préférence
-- l'au moins une valeur limite d'accélération est réglable et/ou
-- une valeur limite d'accélération supérieure et une valeur limite d'accélération inférieure avec des valeurs différentes sont prévues en tant que l'au moins une valeur limite d'accélération,
et/ou
-- la cascade interne, en particulier le deuxième régulateur, pour déterminer une ou la grandeur de réglage pour régler la grandeur d'état de générateur
--- présente une partie intégrante avec une limitation d'intégrateur, et en option
--- la limite de l'intégrateur est réglable et/ou
--- présente des valeurs limites supérieure et inférieure différentes.

5. Procédé selon l'une quelconque des revendications précédentes, **caractérisé en ce que**
- l'au moins une plage de vitesses de rotation prédéterminée est prévue respectivement en tant qu'une plage d'évitement de vitesse de rotation, qui est **caractérisée par** une vitesse de rotation d'évitement inférieure et une vitesse de rotation d'évitement supérieure, et
- la régulation de puissance de vitesse de rotation est utilisée si la vitesse d'évitement inférieure est atteinte lorsque la vitesse de rotation augmente, ou si la vitesse d'évitement supérieure est atteinte lorsque la vitesse de rotation diminue, dans lequel
lors de l'utilisation de la régulation de puissance de vitesse de rotation, l'éolienne, selon une vitesse du vent prédominante,
- peut fonctionner à un point de fonctionnement inférieur dans une plage de vitesses de rotation inférieure, qui comprend la vitesse de rotation d'évitement inférieure, et
- peut fonctionner à un point de fonctionnement supérieur dans une plage de vitesses de rotation supérieure, qui comprend la vitesse d'évitement supérieure, et
- un changement entre les points de fonctionnement inférieur et supérieur est effectué en fonction d'une évaluation aérodynamique des points de travail inférieur et supérieur.

6. Procédé selon l'une quelconque des revendications précédentes, **caractérisé en ce que**
- pour passer entre un ou le point de travail inférieur et supérieur, un test au moins en deux étapes est réalisé, dans lequel
-- dans une première étape, on vérifie si le point de fonctionnement vers lequel le changement doit être effectué présente une efficacité aérodynamique supérieure au point de travail à partir duquel le changement doit être effectué, et
-- dans une deuxième étape, on vérifie si la grandeur d'état de générateur, qui est déterminée avec la régulation de vitesse de rotation à charge partielle, atteint une limite supérieure ou inférieure d'état de générateur, dans lequel en particulier
-- un changement est autorisé en fonction du test dans la première étape, et un changement est prescrit en fonction du test dans la deuxième étape.

7. Procédé selon l'une quelconque des revendications précédentes, **caractérisé en ce que**
- un changement entre l'un ou le point de fonctionnement inférieur et supérieur est mis en oeuvre lorsque
-- le point de fonctionnement, vers lequel le changement doit être effectué,
--- pour une période d'essai pouvant être prédéterminée,
--- présente une efficacité aérodynamique supérieure au point de fonctionnement à partir duquel le changement doit être effectué, dans lequel de préférence
--- la période d'essai pouvant être prédéterminée est comprise dans une plage allant de 5 secondes à 10 minutes, en particulier dans la plage allant de 10 secondes à 5 minutes.

8. Procédé selon l'une quelconque des revendications précédentes, **caractérisé en ce que**
- pour la régulation de puissance de vitesse de rotation, la valeur de consigne de vitesse de rotation
-- est spécifiée en tant que constante, ou
-- est spécifiée sur au moins une caractéristique de vitesse de rotation, dans lequel la caractéristique de vitesse de rotation présente respectivement des valeurs de vitesse de rotation en fonction de la grandeur d'état de générateur à régler, et en particulier
-- la caractéristique de vitesse de rotation est réalisée de telle sorte qu'elle présente une pente négative, au moins par sections, de sorte que les valeurs de vitesse de rotation diminuent à mesure que des valeurs de la grandeur d'état de générateur augmentent.

9. Procédé selon l'une quelconque des revendications précédentes, **caractérisé en ce que**
- pour changer entre un ou le point de fonctionnement inférieur ou supérieur
-- un temps de changement est spécifié, qui est de préférence inférieur à 20 secondes, en particulier inférieur à 10 secondes, et/ou
-- un intervalle de temps est spécifié pour la grandeur d'état de générateur à régler pour commander ce faisant le changement.

10. Procédé selon l'une quelconque des revendications précédentes, **caractérisé en ce que**
- la plage de transition dans la plage de charge partielle se situe dans une plage de vitesses de rotation supérieure, qui est **caractérisée par** des vitesses de rotation à partir d'une vitesse de rotation de transition, dans lequel la plage de vitesses de rotation supérieure est en particulier supérieure à une ou la plage d'évitement de vitesse de rotation, dans lequel
- l'éolienne est **caractérisée par** une vitesse de rotation nominale, et la vitesse de transition est d'au moins 80 %, en particulier d'au moins 85 % de la vitesse nominale et/ou d'une vitesse de rotation de consigne de la régulation de pas.

11. Procédé selon l'une quelconque des revendications précédentes, **caractérisé en ce que**
- pour la régulation de puissance de vitesse de rotation, la valeur de consigne de vitesse de rotation est spécifiée par l'intermédiaire d'une caractéristique de vitesse de rotation de transitoire, qui forme la ou une caractéristique de vitesse de rotation, dans lequel
-- pour une vitesse de rotation avec une valeur de vitesse de rotation correspondant à la vitesse de rotation de transition, la caractéristique de vitesse de rotation de transition s'étend verticalement, de sorte que, lorsque la grandeur d'état de générateur augmente, la vitesse de rotation est constante jusqu'à ce que la grandeur d'état de générateur atteigne une première valeur de référence de générateur prédéterminée, qui est inférieure une valeur nominale de la grandeur d'état de générateur, et/ou
-- la caractéristique de vitesse de rotation de transition présente une pente positive à partir de la vitesse de rotation de transition et/ou à partir de la première valeur de référence de générateur, de sorte que les valeurs de la grandeur d'état de générateur augmentent à mesure que la vitesse de rotation augmente jusqu'à ce qu'une valeur nominale de la grandeur d'état de générateur soit atteinte.

12. Procédé selon l'une quelconque des revendications précédentes, **caractérisé en ce que**
- une réserve de régulation est déterminée en fonction d'une différence entre la grandeur d'état de générateur réglée et une ou la limite supérieure d'état de générateur, ou la différence est la réserve de régulation,
- la réserve de régulation est transférée de la régulation de puissance de vitesse de rotation à la régulation de pas, et
- la régulation de puissance de vitesse de rotation et la régulation de pas fonctionnent au moins en partie en parallèle et sont coordonnées l'une avec l'autre par l'intermédiaire de la réserve de régulation, et/ou
- une commutation ou une transition entre la régulation de puissance de vitesse de rotation et la régulation de pas est effectuée en fonction de la réserve de régulation.

13. Procédé selon l'une quelconque des revendications précédentes, **caractérisé en ce que**
- la régulation de puissance de vitesse de rotation est prioritaire par rapport à la régulation de pas, en particulier de telle sorte que la régulation de pas est totalement ou partiellement supprimée tant que la régulation de puissance de vitesse de rotation n'atteint pas une limitation de grandeur de réglage, et/ou
- la régulation de pas commande en supplément la vitesse de rotation en fonction d'une valeur d'accélération réelle du rotor, et une régulation de la vitesse de rotation est supprimée par la régulation de pas à mesure que la valeur de consigne de générateur se situe en dessous d'une limite de valeur de consigne de générateur dans la régulation de puissance de vitesse de rotation.

14. Procédé selon l'une quelconque des revendications précédentes, **caractérisé en ce que**
- la régulation de puissance de vitesse de rotation utilise la grandeur d'état de générateur en tant que grandeur de réglage pour réguler la vitesse de rotation, laquelle est désignée par grandeur de réglage de générateur, et
- la régulation de pas pour réguler la vitesse de rotation utilise l'angle de pale en tant que grandeur de réglage, qui est désignée par grandeur de réglage de pas, dans lequel les angles de pale sont augmentés, en particulier à mesure que la vitesse du vent augmente, respectivement à partir d'un angle de pale à charge partielle, qui est réglé dans la plage de charges partielles, jusqu'à un angle d'extrémité, dans lequel
- la régulation de puissance de vitesse de rotation est coordonnée avec la régulation de pas, et en particulier
- pour coordonner la régulation de puissance de vitesse de rotation avec la régulation de pas, la grandeur de réglage de générateur et la grandeur de réglage de pas sont coordonnées entre elles.

15. Procédé selon la revendication 14, **caractérisé en ce que**
- une ou la limitation de grandeur de réglage de la grandeur de réglage de générateur est prise en compte, et
- la régulation de puissance de vitesse de rotation et la régulation de pas sont coordonnées de telle sorte que la régulation de puissance de vitesse de rotation, tant qu'elle n'atteint pas la limitation de grandeur de réglage, exerce une plus grande influence sur la vitesse de rotation que la régulation de pas, et/ou
- la grandeur de réglage de pas est réglée en fonction de la limitation de grandeur de réglage de la grandeur de réglage de générateur, dans lequel en particulier
-- une différence entre la grandeur de réglage de générateur et la limitation de grandeur de réglage définit une plage de réglage de la régulation de puissance de vitesse de rotation, et
-- la grandeur de réglage de pas est modifiée de telle sorte que plus la plage de réglage de la régulation de puissance de vitesse de rotation est grande, moins la régulation de pas a d'influence sur la vitesse de rotation.

16. Procédé selon l'une quelconque des revendications précédentes, **caractérisé en ce que**
- la régulation de pas est effectuée de telle sorte que
-- une deuxième valeur de consigne d'accélération est déterminée dans une cascade externe à partir d'une comparaison d'une vitesse de rotation de consigne spécifiée avec une vitesse de rotation réelle détectée par l'intermédiaire d'un troisième régulateur,
--- une grandeur de réglage, en particulier une ou la grandeur de réglage de pas, est déterminée pour ajuster l'angle de pale dans une cascade interne à partir d'une comparaison de la deuxième valeur de consigne d'accélération à une valeur d'accélération réelle détectée par l'intermédiaire d'un quatrième régulateur, et
-- la comparaison de la deuxième valeur de consigne d'accélération à la valeur réelle d'accélération détectée forme une erreur de régulation et l'erreur de régulation est modifiée au moyen d'une ou de la réserve de régulation, et l'erreur de régulation ainsi modifiée forme une grandeur d'entrée du quatrième régulateur, de préférence dans lequel
-- la valeur de consigne d'accélération, la valeur réelle d'accélération et l'erreur de régulation en résultant sont chacune réalisées comme des valeurs de performance, et/ou
-- la modification est réalisée notamment de telle manière que l'ajustement de l'angle de pale est réduit, par rapport au cas où l'erreur de régulation n'est pas modifiée, ou que l'ajustement de l'angle de pale est supprimé, et/ou dans lequel
-- la modification est effectuée en particulier de telle sorte que la réserve de régulation ou une grandeur équivalente, notamment proportionnelle, est effectivement appliquée à la comparaison de la deuxième valeur de consigne d'accélération à la valeur réelle d'accélération détectée.

17. Procédé selon l'une quelconque des revendications précédentes, **caractérisé en ce que**
- dans la régulation de puissance de vitesse de rotation, la première valeur de consigne d'accélération, qui est déterminée en fonction d'une comparaison d'une vitesse de rotation de consigne spécifiée à une vitesse de rotation réelle détectée, est modifiée en supplément en fonction d'un angle de pale, en particulier que
- la première valeur de consigne d'accélération est augmentée d'une valeur de mise en marche, dans lequel la valeur de mise en marche est déterminée en fonction d'un angle de différence en tant que différence entre un angle de pale actuel et un ou l'angle de pale en charge partielle, en particulier est déterminée de manière proportionnelle à celui-ci.

18. Procédé selon l'une quelconque des revendications précédentes, **caractérisé en ce que**
- un décalage de caractéristique est mis en oeuvre, dans lequel, en fonction d'un point de fonctionnement, en particulier en fonction d'un comportement d'une régulation de pas, en particulier en fonction d'un angle de pale réglé, la caractéristique de fonctionnement est décalée de telle sorte qu'une valeur plus élevée de la grandeur d'état de générateur est réglée, à une vitesse de rotation identique, en particulier de telle sorte que
- la caractéristique de fonctionnement est décalée d'une vitesse de rotation de décalage prédéterminée ou réglable, qui se situe en particulier dans une plage de 0,3 à 1,5 tr/min, de préférence dans une plage de 0,5 à 1 tr/min.

19. Procédé selon la revendication 18, **caractérisé en ce que**
- le décalage de caractéristique
-- est mis en oeuvre en fonction d'un dépassement de l'angle de pale en charge partielle, en particulier
- en fonction d'une valeur de dépassement, de laquelle l'angle de pale dépasse l'angle en charge partielle.

20. Eolienne (100) avec
- un rotor aérodynamique (106), qui fonctionne à vitesse de rotation variable et qui présente des pales de rotor (108) dont l'angle de pale peut être ajusté, et
- un dispositif de commande pour commander l'éolienne (100), dans laquelle
-- le dispositif de commande est préparé pour commander l'éolienne au moyen d'un procédé selon l'une quelconque des revendications précédentes.

21. Parc éolien (112) avec plusieurs éoliennes (100), dans lequel une, plusieurs ou toutes les éoliennes sont réalisées en tant qu'une éolienne selon la revendication 20.
